## Europäisches Patentamt
## European Patent Office
## Office européen des brevets

(19)

(11) Veröffentlichungsnummer: **0 362 592**
**A2**

(12) **EUROPÄISCHE PATENTANMELDUNG**

(21) Anmeldenummer: **89117078.9**

(22) Anmeldetag: **15.09.89**

(51) Int. Cl.5 **B62D 5/06 , B62D 5/22**

(30) Priorität: 04.10.88 DE 3833637
24.12.88 DE 3843893
28.08.89 DE 3928376

(43) Veröffentlichungstag der Anmeldung:
**11.04.90 Patentblatt 90/15**

(84) Benannte Vertragsstaaten:
**DE ES FR GB IT**

(71) Anmelder: **ALFRED TEVES GMBH**
**Guerickestrasse 7**
**D-6000 Frankfurt/Main 90(DE)**

(72) Erfinder: **Kahrs, Manfred Dr.**
**Auf der Ahl 93**
**D-6200 Wiesbaden(DE)**
Erfinder: **Kunze, Lothar**
**Sportplatzstrasse 4**
**D-6238 Hofheim-Langenhain(DE)**
Erfinder: **Baier, Joachim**
**Dahlienweg 4-6**
**D-6450 Hanau 8(DE)**
Erfinder: **Kunz, Gerhard**
**Weimarer Strasse 13A**
**D-6307 Linden(DE)**
Erfinder: **Möller, Bernhard**
**Am Holzweg 29**
**D-6231 Sulzbach/Ts.(DE)**
Erfinder: **Beer, Wilhelm**
**Merowinger Ring 23**
**D-6090 Rüsselsheim 7(DE)**
Erfinder: **Krines, Hans-G.**
**Am Buchstein 18**
**D-6390 Usingen 2(DE)**
Erfinder: **Schudt, Gerhard**
**Weissenburgstrasse 5**
**D-6450 Hanau(DE)**

(74) Vertreter: **Portwich, Peter**
**c/o ALFRED TEVES GMBH Guerickestrasse 7**
**D-6000 Frankfurt/Main 90(DE)**

(54) **Hydraulische Hilfskraftlenkung für Kraftfahrzeuge.**

(57) Es wird eine hydraulische Hilfskraftlenkung für Kraftfahrzeuge vorgeschlagen, wobei die hydraulische Unterstützung lediglich oberhalb einer vorgegebenen Lenkkraft erfolgt, mit einem an eine mechanische Lenkung gekoppelten Arbeitszylinder (6), einer Pumpe (19,36) und einem Steuerventil (12). Um eine sichere Funktionsweise und einen einfachen Aufbau der Hilfskraftlenkung zu erreichen, wird vorgeschlagen, daß eine durch die Lenkkraft bewirkte Verschiebung eines gegenüber dem Fahrzeugkörper verschieblich gelagerten Bauteils (2) der mechanischen Lenkung entgegen einer Vorspannkraft der mechanischen Betätigung des Steuerventils (12) dient.

Fig. 1

## Hydraulische Hilfskraftlenkung für Kraftfahrzuge

Die Erfindung betrifft eine hydraulische Hilfskraftlenkung für Kraftfahrzeuge nach dem Oberbegriff des Anspruches 1.

Eine derartige hydraulische Hilfskraftlenkung ist aus der DE-OS 28 39 121 bekannt. Diese bekannte Hilfskraftlenkung weist einen drehwinkelabhängigen Meßwertgeber auf, der als Fühler für die aufgewendete Handkraft am Lenkrad dient. Das ermittelte Signal wird an eine elektronische Regeleinheit weitergeleitet, welche die Steuerung der Magnetventile übernimmt, welche zwischen der Pumpe und dem Arbeitszylinder angeordnet sind. Diese bekannte Hilfskraftlenkung besitzt neben dem aufwendigen und kostenintensiven Aufbau den Nachteil, daß bei einem Defekt der elektronischen Steuereinheit die Lenkung blockiert werden kann. Dieses Risiko könnte zwar durch eine redundante Auslegung der Steuerelektronik vermieden werden, jedoch würde sich der Aufwand durch diese Maßnahme nochmals erhöhen.

Der Erfindung liegt daher die Aufgabe zugrunde, eine gattungsgemäße hydraulische Hilfskraftlenkung für Kraftfahrzeuge zu schaffen, welche sich durch einen einfachen Aufbau auszeichnet und die stets eine sichere Betriebsweise garantiert. Insbesondere soll die bedarfsabhängige hydraulische Unterstützung ohne aufwendige elektronische Bauteile gesteuert werden.

Diese Aufgabe wird erfindungsgemäß durch die kennzeichnenden Merkmale des Anspruches 1 gelöst.

Bei einer bevorzugten Erfindungsausführung ist vorgesehen, daß eins zweier relativ zueinander verschiebbarer Ventilelemente an dem verschiebbar gelagerten Bauteil befestigt ist, während das andere Ventilelement am Fahrzeugkörper angelenkt ist. Auf diese Weise erfolgt eine unmittelbare Betätigung des Steuerventils ab einer durch die Vorspannkraft vorgegebenen Lenkkraft. Der Kraftfluß führt nur über eine sehr geringe Anzahl von Bauteilen.

Eine für die Praxis besonders geeignete Ausführung der Erfindung sieht vor, daß das Lenkgetriebe der mechanischen Lenkung elastisch verschiebbar am Fahrzeug gelagert ist, daß die hydraulische Einheit, zumindest aber eines zweier relativ zueinander verschiebbarer Ventilelemente, fest mit dem Lenkgetriebe verbunden ist, während das andere Ventilelement mit dem Fahrzeugkörper verbunden ist. Diese Ausführung ermöglicht die Anordnung eines die Vorspannkraft erzeugenden Elementes sowohl zwischen dem Fahrzeugkörper und einem Ventilelement als auch zwischen den beiden Ventilelementen. Durch eine elastische Verbindung zwischen Fahrzeugaufbau und Lenkgetriebe, wobei die hydraulische Einheit fest mit dem Lenkgetriebe verbunden ist, wird eine sehr effektive Geräuschdämpfung erzielt.

Um eine möglichst kompakte integrierte Hydraulikeinheit zu erhalten, welche sämtliche für die Ansteuerung notwendigen Bauteile umfaßt, ist es vorteilhaft, wenn das Lenkgetriebe in der Fahrzeugquerachse verschiebbar am Fahrzeugkörper gelagert ist, daß Gehäuse des Steuerventils starr mit dem Lenkgetriebe verbunden ist und wenn das im Gehäuse des Steuerventils verschiebbare Steuerelement, welches mit dem Fahrzeug verbunden ist, in beide Verschieberichtungen gegen das Gehäuse des Steuerventils oder gegen ein mit diesem starr verbundenes Bauteil elastisch vorgespannt ist. Durch diese Ausführung ist eine komplett vormontierte, ölgefüllte und funktionsgeprüfte Hydraulikeinheit geschaffen, welche betriebsbereit beim Fahrzeughersteller lediglich mit einfachen Montageschritten am Fahrzeug montiert und angeschlossen werden muß.

Eine Ausführung der Erfindung für den Fall, das Lenkgetriebe fest mit dem Fahrzeugaufbau verbunden sein muß, sieht vor, daß ein Abschnitt der Lenkwelle verschiebbar gelagert ist und daß diese Verschiebung durch eine aus der Lenkkraft resultierende Kraftkomponente das Steuerventil betätigt. Zur Erzeugung dieser Reaktionskraftkomponenten eignen sich besonders Lenkgetriebe, die entweder als Zahnstangengetriebe mit Schrägverzahnung oder als Kugelumlauflenkungsgetriebe ausgeführt sind. Bei beiden Ausführungen wird eine der Lenkkraft in Größe und Richtung proportionale Reaktionskraftkomponente in der Lenkwelle erzeugt, welche zur Beeinflußung des Steuerventils genutzt werden kann, welches in diesem Falle vorzugsweise in der Lenkwelle bzw. dem Lenkwellengehäuse integriert ist. Je nach Anwendungsfall empfehlen sich verschiedene Ausführungen der Federelemente zur Erzeugung der Vorspannkraft, mit welcher das verschiebbare Bauteil beaufschlagt ist.

Eine für das Fahrverhalten besonders günstige Ausführung sieht vor, daß die Vorspannung mittels eines gefesselten Federelementes erfolgt. Dadurch ist eine Vorspannung auch in der Neutralstellung vorhanden, d.h., daß das Steuerventil erst ab einer Mindestlenkkraft betätigt wird, wodurch z.B. ein Einsetzen der hydraulischen Unterstützung bei Lenkkorrekturen vermieden wird, welche aus Seitenwindeinflüssen bei hohen Geschwindigkeiten, Radunwuchten oder dergleichen resultieren. Ohne diese Mindestlenkkraft-Schwelle wäre ein "Aufschaukeln" der Lenkung durch abwechselndes Einschalten der Hydraulikunterstützung und Gegenlenken durch den Fahrer möglich.

Da die Energieversorgung der Hydraulikeinheit lediglich bei Hilfskraftbedarf erfolgen soll, ist vorgesehen, daß durch das Steuerelement oder das Federelement ein elektrischer Schalter betätigbar ist, der die Pumpe schaltet.

Eine vorteilhafte Ausführung der Erfindung sieht vor, daß das Steuerventil als 3.3-Wegeventil in Längsschieberbauweise ausgeführt ist. Auch eine Ventilausführung als Doppelsitzventil ist für den Einsatz in der hydraulischen Hilfskraftlenkung geeignet, da auch hier eine einfache Anlenkung des Steuerelementes an den Fahrzeugkörper möglich ist.

Einen besonders einfachen Aufbau der erfindungsgemäßen Hilfskraftlenkung erhält man, wenn eine reversierbare Pumpe vorgesehen ist, deren Drehrichtung von der Lenkrichtung abhängt. Hierbei betätigt das Steuerelement des Steuerventils einen Schalter mit drei Schaltstellungen. Vorteilhaft ist eine Erfindungsausführung, bei welcher das verschiebbar gelagerte Bauteil der mechanischen Lenkung nur begrenzt verschiebbar ist, da sich in diesem Falle nur ein bestimmter Teil der Lenkkraft über das Steuerventil abstützt. Eine praktische Ausführung der Erfindung zeichnet sich dadurch aus, daß das Steuerventil elastisch zentiert ist, wobei die zentrierende eleastische Anordnung zumindest teilweise im Kraftfluß der Lenkkraft liegt. Durch diese Maßnahme können beispielsweise die Zentrierfedern des Steuerventils durch entsprechende Auslegung der Vorspannung des verschiebbaren Bauteils der mechanischen Lenkung dienen, wobei die Vorspannkraft wiederum den Schwellenwert bildet, ab welchem die hydraulische Verstärkung aktiviert wird.

Eine besonders kostengünstige und kompakte Bauweise erreicht man bei der erfindungsgemäßen Hilfskraftlenkung dadurch, daß die elastische Anordnung mindestens eine sich an zwei Stützplatten abstützende Feder umfaßt, wobei die Stützplatten gegen zwei beabstandete Anschläge des Gehäuses des Steuerventiles vorgespannt sind und daß am Steuerelement des Steuerventils Anschlagflächen gleichen Abstands vorgesehen sind, mittels derer die jeweils zugeordnete Stützplatte entgegen der Vorspannkraft beaufschlagbar ist.

Um bei hohen Lenkgeschwindigkeiten und großem Druckmittelbedarf die Druckmittelversorgung auch mit einer Pumpe mit geringer Leistungsaufnahme sicherzustellen, ist es von Vorteil, wenn zwischen Pumpe und Steuerventil ein Druckspeicher geschaltet ist. Um eine unerwünschte Entladung des Speichers durch Leckverluste am Steuerventil zu vermeiden, ist bei einer bevorzugten Ausführungsform der Erfindung ein Schaltventil zwischen dem Druckspeicher und dem Steuerventil vorgesehen.

Wird die hydraulische Hilfskraftlenkung mit Bremsflüssigkeit als Druckmittel betrieben, so ist ohne Medientrennung eine Energieversorgung durch die Pumpe einer hydraulischen Bremsanlage möglich.

Bei einer anderen günstigen Ausführung der Erfindung ist vorgesehen, daß die mechanische Lenkung als Zahnstangenlenkung mit einem mit der Lenkwelle verbundenen Antriebsritzel und einer Zahnstange ausgeführt ist, daß die Drehmomentübertragung von der Lenkwelle auf das Antriebsritzel durch mindestens einen Bolzen erfolgt, der in je eine radial verlaufende Ausnehmung sowohl des Antriebsritzels als auch der Lenkwelle eingreift, daß eine dieser radialen Ausnehmungen als schräg zur Radialebene verlaufende Kulissenführung ausgebildet ist, und daß die Lenkwelle axial verschiebbar und vorgespannt auf dem Antriebsritzel gelagert und mit dem Steuerventil verbunden ist.

Durch diese Maßnahme wird eine Hilfskraftlenkung geschaffen, welche einen kompakten und einfachen Aufbau aufweist und dabei möglichst wenige Veränderungen an den Teilen des mechanischen Lenkgetriebes erfordert, wobei fast alle Getriebeteile eines für die rein mechanische Lenkung vorgesehenen Lenkgetriebes bei der hilfskraftunterstützten Lenkung beibehalten werden sollen.

Dadurch wird eine Möglichkeit zu einer nachrüstbaren (add on) hydraulischen Lenkunterstützung geschaffen, welche mit sehr geringen Eingriffen in die ohnehin vorhandene mechanische Lenkung verbunden ist. Diese Lösung ist besonders für Zahnstangenlenkungen geeignet, bei welcher das Antriebsritzel keine Schrägverzahnung aufweist.

Bei einer gattungsgemäßen Hilfskraftlenkung, mit schrägverzahntem Antriebsritzel läßt sich eine einfache und mit sehr wenigen Eingriffen in das Lenkgetriebe verbundene Lösung dadurch erreichen, daß das Antriebsritzel axial verschiebbar mittels mindestens eines Wälzlagers im Gehäuse des Lenkgetriebes gelagert ist, daß der Außenring des Wälzlagers axial verschiebbar im Gehäuse angeordnet und an beiden Stirnseiten durch elastische Mittel beaufschlagt ist und daß der Lagerinnenring auf dem Antriebsritzel axial fixiert ist, wobei das Antriebsritzel mit dem Steuerventil verbunden ist.

Falls Änderungen der Lagerung des Antriebsritzels im Bereich des Gehäuses nicht in Frage kommen, so läßt sich eine Ausführungsform der Erfindung anwenden, bei welcher der Innenring des Wälzlagers axial verschiebbar auf dem Antriebsritzel, welches mit dem Steuerventil verbunden ist, gelagert und stirnseitig jeweils durch elastische Mittel beaufschlagt ist und daß der Außenring des Lagers axial im Gehäuse fixiert ist.

Bei derartigen hydraulischen Hilfskraftlenkungen ist es von besonderem Vorteil, wenn die elastische Beaufschlagung bereits in der Nullage der Lenkung eine Vorspannkraft entfaltet, also eine Kraftschwelle bildet. Dies läßt sich insbesondere durch den Einsatz gefesselter Federelemente erreichen. Bei einer bevorzugten Ausführungsform der Erfindung ist daher vorgesehen, daß die Beaufschlagung der Stirnseiten des Lagers der Antriebswelle über je eine Zwischenscheibe erfolgt, die an einen Anschlag anlegbar ist, wobei der Abstand der Anschläge der Breite des verschiebbaren Lagerringes entspricht. Durch die oben genannten Ausführungen läßt sich eine besonders einfache Mittenzentrierung des Steuerventils realisieren.

Eine weitere Ausführungsform der Erfindung zeichnet sich dadurch aus, daß das aus dem Lenkgetriebegehäuse herausragende Lenkwellenende keine axiale Bewegung ausführt. Hierzu ist vorgesehen, daß das mit dem Steuerventil verbundene Antriebsritzel schrägverzahnt ist, daß zumindest ein Abschnitt der Lenkwelle drehbar aber axial fixiert im Lenkgetriebe gelagert ist, und daß das Antriebsritzel axial verschiebbar und in beide axialen Bewegungsrichtungen vorgespannt in dem Abschnitt der Lenkwelle gelagert ist.

Um Reibungseinflüsse auf das Ansprechverhalten der hydraulischen Hilfskraft zu vermeiden, ist vorgesehen, daß im Bereich der Lagerstelle des Antriebsritzels im Abschnitt der Lenkwelle sowohl im Lagerzapfen des Antriebsritzels als auch im zugeordneten Lagerbereich des Abschnittes der Lenkwelle jeweils mindestens eine in Axialrichtung verlaufende Nut vorgesehen ist, in welche mindestens ein kugelförmiges Mitnehmerelement eingesetzt ist.

Eine besonders günstige Erfindungsausführung erhält man dadurch, daß das Steuerventil koaxial mit dem Antriebsritzel verbunden ist und der Lagerung des Antriebsritzels im Gehäuse des Lenkgetriebes dient.

Die Funktion und weitere vorteilhafte Merkmale der Erfindung ergeben sich aus der nachstehenden Beschreibung anhand der Zeichnung. Für einander entsprechende Teile werden im folgenden die gleichen Bezugszeichen gewählt.

Hierzu zeigt:

Fig. 1 eine erste Ausführungsform der Erfindung,

Fig. 2 eine zweite Ausführungsform der Erfindung in Ruhestellung bzw. bei einer Lenkbetätigung ohne Servounterstützung,

Fig. 3 die zweite Ausführungsform der Erfindung in der Schaltstellung für eine Lenkbetätigung mit Servounterstützung,

Fig. 4 eine Darstellung mit mehreren Schnitten der integrierten Hydraulikeinheit,

Fig. 5 einen Schnitt durch eine Ausführung des erfindungsgemäßen Federelements als gefesselte Feder und durch das Steuerventil,

Fig. 6 bis Fig. 8 Schnitte durch ein erfindungsgemäßes Federelement,

Fig. 9 eine Ausführungsform der Erfindung mit einem über das Federelement an die Lenkwelle gekoppelten Steuerventil,

Fig. 10 eine Ausführung der Erfindung mit Druckspeicher und mittig offenem Steuerventil,

Fig. 11 eine Erfindungsausführung mit mittig geschlossenem Steuerventils,

Fig. 12 ein Kräftediagramm,

Fig. 13 ein weiteres Ausführungsbeispiel,

Fig. 14 bis 16 jeweils eine vergrößerte Darstellung einer Einzelheit aus Fig. 13,

Fig. 17 und Fig. 18 weitere Ausführungsformen der Erfindung und

Fig. 19 eine seitliche Teilansicht des Ausführungsbeispiels gemäß Fig. 18.

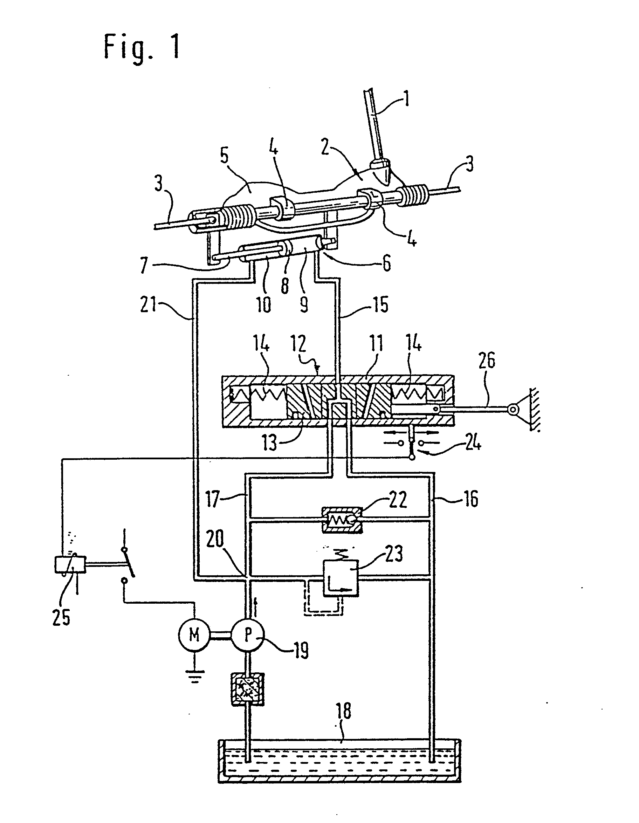

Die hydraulische Hilfskraftlenkung gemäß Fig. 1 zeigt eine mechanische Lenkung, welche sich aus der Lenkwelle 1, dem Lenkgetriebe 2, und der Spurstange 3 zusammensetzt. Die Spurstangen sind an nicht dargestellte Lenkhebel der Radaufhängung angelenkt. Das Lenkgetriebe 2 ist mittels zweier Schellen 4 und gummielastischer Elemente am fest mit dem Fahrzeugkörper verbundenen Fahrzeugaufbau 5 verschraubt. Die gummielastische Aufhängung des Lenkgetriebes 2 gestattet eine bestimmte Verschiebbarkeit in die Fahrzeugquerrichtung.

Der Arbeitszylinder 6 ist fest mit dem Gehäuse des Lenkgetriebes 2 verschraubt, während die Kolbenstange 7 fest mit der Spurstange 3 verbunden ist. Am anderen Ende der Kolbenstange 7 befindet sich der Arbeitskolben 8, welcher im Arbeitszylinder 6 die Arbeitskammern 9 und 10 voneinander trennt. Das Gehäuse 11 des Steuerventils 12 ist fest mit dem Arbeitszylinder 6 bzw. mit dem Lenkgetriebe verbunden. In dem Gehäuse 11 ist der verschiebbar gelagerte Steuerschieber 13 mittels zweier gleichstarker Federn 14 gegen das Gehäuse in beide Verschieberichtungen vorgespannt und in Ruhestellung zentriert.

Das Steuerventil 12 ist als 3/3-Wegeventil ausgebildet, wobei ein Anschluß über die Verbindung 15 mit der Arbeitskammer 9 des Arbeitszylinders 6 verbunden ist, während die beiden anderen Anschlüsse über die Verbindungen 16 und 17 mit dem Behälter 18 bzw. dem Druckanschluß der Pumpe 19 verbunden sind.

Der Arbeitszylinder 6 ist als Differentialzylinder ausgebildet, wobei die Arbeitskammer 9 der größeren Druckbeaufschlagungsfläche am Arbeitskolben zugeordnet ist, während die Querschnittsfläche des Kolbens, welche der Arbeitskammer 10 zugeordnet ist, halb so groß ist wie die erstgenannte Druckbeaufschlagungsfläche. Vom Knotenpunkt 20 der Verbindung 17 führt eine Druckmittelleitung 21 zur Arbeitskammer 10 des Arbeitszylinders 6. Zwischen den Verbindungen 16 und 17 sind zwei Verbindungen vorgesehen, wobei in der einen ein Nachsaugventil 22 und in der anderen ein Überdruckventil 23 angeordnet ist.

In der Verbindung zwischen dem Behälter 18 und der von einem Elektromotor angetriebenen Pumpe 19 ist ein Filterelement angeordnet. Der elektrische Antrieb der Pumpe 19 wird über ein Relais 25 von dem elektrischen Schalter 24 betätigt. Die Schalterbetätigung erfolgt durch ein Verschieben des Steuerschiebers 13 aus der Ruhestellung heraus. Der Steuerschieber 13 ist mittels eines Reaktionsstabes 26 an einem fahrzeugfesten Punkt angelenkt.

Bei unbetätigter Lenkung bzw. bei einer Betätigung der Lenkung mit einer sehr geringen Handkraft befindet sich die hydraulische Hilfskraftlenkung an der dargestellten Ruhestellung. In dieser Stellung ist die Pumpe 19 die durch den elektrischen Schalter 24 ausgeschaltet. Die Arbeitskammern 9 und 10 sind hydraulische miteinander und mit dem Behälter verbunden. Wird die Lenkung beispielsweise bei stehendem Fahrzeug oder bei sehr niedrigen Geschwindigkeiten betätigt, so sind höhere Lenkkräfte erforderlich. In diesem Falle verschiebt sich Lenkgetriebe 2 entsprechend der Lenkrichtung innerhalb seiner elastischen Aufhängung am Fahrzeugaufbau in eine Richtung, welche quer zur Fahrzeuglenkachse liegt. Da die gesamte hydraulische Einheit, insbesondere aber das Gehäuse 11 des Steuerventils 12, fest mit dem Lenkgetriebe 2 verbunden ist, während der Steuerschieber 13 an einem Fahrzeugaufbau festen Punkt angelenkt ist, erfolgt ab einer Lenkkraft, welche größer ist als die Vorspannung der entsprechenden Feder 14 eine Relativverschiebung zwischen dem Gehäuse 11 und dem Steuerschieber 13. Durch diese Relativverschiebung wird der die Pumpe antreibende Elektromotor eingeschaltet, außerdem wird das Steuerventil 12 je nach Lenkrichtung in einer Schaltstellung gebracht, bei welcher der Arbeitskolben 8 entsprechend seiner wirksamen Querschnittsflächen vom Pumpendruck beaufschlagbar ist.

Bei eingeschalteter Pumpe 19 ist die Arbeitskammer 10 stets druckbeaufschlagt, so daß sich bei einer Schaltstellung des Steuerventils 12, bei welcher die Arbeitskammer 9 mit dem Behälter 18 verbunden ist, eine Bewegungsrichtung des Arbeitskolbens 8 ergibt, bei welcher die Kolbenstange 7 in den Arbeitszylinder 6 hineinverschoben wird. Wird dagegen sowohl die Arbeitskammer 10 als auch die Arbeitskammer 9 mit dem Pumpendruck beaufschlagt, so wird die Kolbenstange 7 aus dem Arbeitszylinder 6 herausgeschoben. Fällt bei oder nach einer Lenkbewegung die aufgebrachte Lenkkraft an den Spurstangen unter einen Wert, welcher geeignet ist, die Vorspannung der entsprechenden Feder 14 zu überwinden, so stellt sich das Steuerventil 12 wieder in seine Ruhelage zurück, wobei die Pumpe ausgeschaltet wird und die Arbeitskammern 9 und 10 wieder miteinander und mit dem Behälter 18 verbunden sind.

Bei einer Lenkung ohne Servounterstützung wird das Druckmittel drucklos zwischen den beiden Arbeitskammern hin und her geschoben, wobei die sich aus dem Volumen der Kolbenstange ergebende Differenzflüssigkeitsmenge je nach Lenkrichtung aus dem Behälter nachgesaugt oder in diesen hineinverschoben wird. Dies gilt sowohl für den Fall daß die von Hand aufgebrachte Lenkkraft sehr gering ist, als auch für den Fall eines Ausfalls der Pumpe bzw. der elektrischen Energieversorgung des Antriebsmotors.

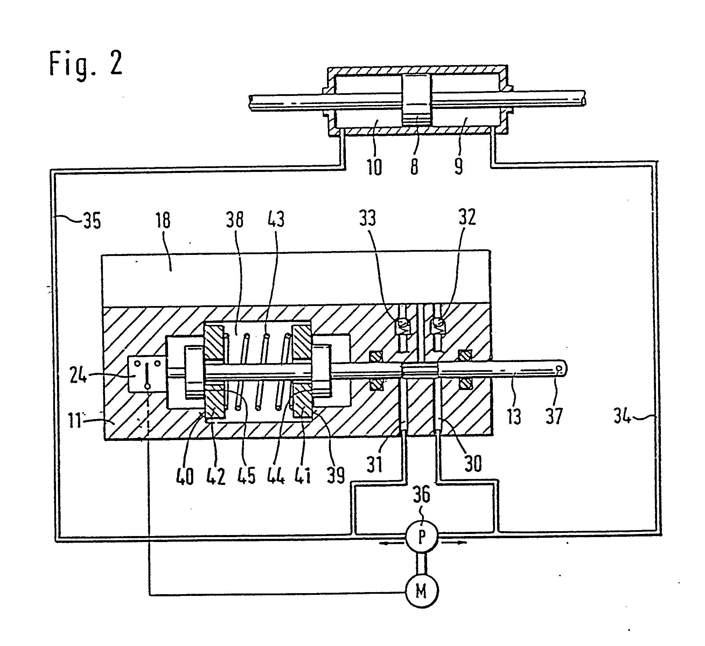

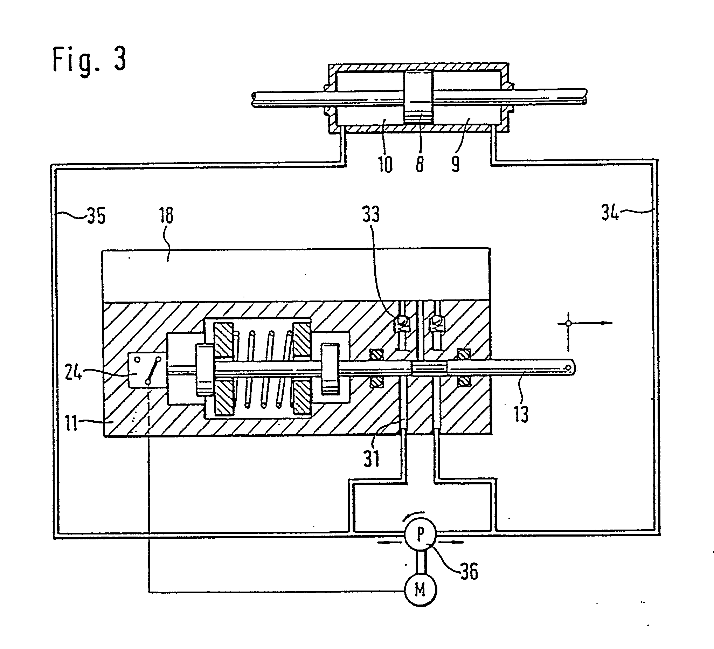

Das Ausführungsbeispiel gemäß Fig. 2 und 3 zeigt eine Ausführung des Arbeitszylinders 6 als Gleichlaufzylinder. Der mechanische Teil der Lenkung ist in diesen beiden Figuren nicht dargestellt, für einander entsprechende Teile werden in allen drei Figuren die gleichen Bezugzeichen gewählt. Der nicht dargestellte Teil der Lenkung entspricht dem Aufbau der Fig. 1. In Fig. 2 ist die Ruhestellung dargestellt, welche sich bei nicht betätigter Lenkung bzw. bei einer Betätigung der Lenkung mit einer sehr geringen Lenkkraft einstellt. Der Steuerschieber 13, welcher gedichtet im Gehäuse 11 verschiebbar geführt ist, weist eine Steuernut auf, durch welche die Verbindung der Kanäle 30 und 31 mit dem Behälter 18 steuerbar ist. Unter Umgehung des Steuerschiebers 13 sind die Kanäle 30 und 31 über die Rückschlagventile 32 und 33 mit dem Behälter 18 verbunden. Die Rückschlagventile 32 und 33 sind dabei so angeordnet, daß sie die Strömungsrichtung von dem jeweiligen Kanal zum Behälter 18 sperren. Der Kanal 30 ist an die Druckmittelverbindung 34 angeschlossen, welche zwischen der reversierbaren Pumpe 36 und der Arbeitskammer 9 vorgesehen ist. An die Druckmittelverbindung 35 zwischen der Arbeitskammer 10 und der reversierbaren Pumpe 36 ist der Kanal 31 angeschlossen. Der Behälter 18 ist im Gehäuse 11 integriert.

Der mehrfach gestufte Steuerschieber 13 ist durch die im Gehäuse 11 ausgebildete Zentrierkammer 38 geführt, an deren einem Ende sich ein mit einem Ende des Steuerschiebers 13 verbundener, elektrischer Schalter 24 befindet, der den die Pumpe antreibende Elektromotor schaltet. Am anderen Ende des Steuerschiebers 13 befindet sich er Anlenkpunkt 37, welcher mit dem Fahrzeugkörper verbunden ist.

Die gestufte Zentrierkammer 38 weist zwei Anschläge 39 und 40 auf, an denen sich jeweils eine der beiden Stützplatten 41 und 42 abstützt, welche durch die zwischen den beiden Stützplatten angeordnete Druckfeder 43 beaufschlagt sind. Beiderseits der Stützplatten 41, 42 sind an dem durch die Stützplatten geführten Steuerschieber zwei Absätze vorgesehen, deren den Stützplatten zugewandte Anschlagflächen 44,45 um dasselbe Maß voneinander beabstandet sind wie die Anschläge 39 und 40. Solange die Stützplatten 41 und 42 an den zugeordneten Anschlägen 39 bzw. 40 anliegen, befindet sich das Steuerventil bzw. die Steuernut in der Ruhestellung, in der die Pumpe ausgeschaltet ist. Ohne Servounterstützung wird hierbei das Druckmittel drucklos zwischen den beiden Arbeitskammern verschoben.

Die Funktion der zweiten erfindungsgemäßen Ausführungsform entspricht im wesentlichen derjenigen der des in Fig. 1 beschriebenen Ausführungsbeispiels. Sobald die aufgebrachte Lenkkraft einen bestimmten Wert übersteigt, wird der Steuerschieber je nach Lenkrichtung in die eine oder andere Richtung entgegen der Vorspannkraft der Feder 43 verschoben. Eine Schaltstellung ist in Fig. 3 dargestellt. In dieser Schaltung soll der Arbeitskolben 8 gemäß der Darstellung in Fig. 3 nach rechts verschoben werden. Entsprechend der aufgebrachten Lenkkraft verschiebt sich das mit dem elastisch aufgehängten Lenkgetriebe 2 verbundene Gehäuse 11 nach links, während der Steuerschieber durch seine fahrzeugfeste Anlenkung seine Stellung beibehält. Durch die Relativbewegung zwischen Steuerschieber 13 und Gehäuse 11 wird der elektrische Schalter 24 betätigt, wodurch die reversierbare Pumpe 36 in einer Drehrichtung angetrieben wird, in welcher sie in die Druckmittelverbindung 35 und damit in die Arbeitskammer 10 fördert. Der Kanal 31 ist in dieser Schaltstellung vom Behälter 18 getrennt, während der Kanal 30 und damit die Arbeitskammer 9 mit dem Behälter 18 verbunden ist. Über diese Verbindung wird das aus der Arbeitskammer 9 verdrängte Druckmittelvolumen dem Behälter 18 zugeführt. Sollte die Pumpe 36 bei einem derarigen Betriebeszustand ausfallen, so müßte das Druckmittel aus der Arbeitskammer 9 ohne Servounterstützung, also lediglich mit Handkraft in den Behälter 18 verschoben werden, während die Arbeitskammer 10 über das Rückschlagventil 33 Druckmittel aus dem Behälter 18 nachsaugen kann.

Bei Umkehr der Lenkrichtung wird das Gehäuse 11 in die andere Richtung verschoben, wodurch die reversierbare Pumpe 36 in die andere Drehrichtung geschaltet wird, so daß sie in die Arbeitskammer 9 fördert. Entsprechend umgekehrt ist dann auch die Schaltung der Kanäle 30,31. Selbstverständlich ist es auch möglich, den Steuerschieber 13 an das verschiebbar gelagerten Lenkgetriebe 2 anzukoppeln und das Gehäuse 11 am Fahrzeug zu fixieren.

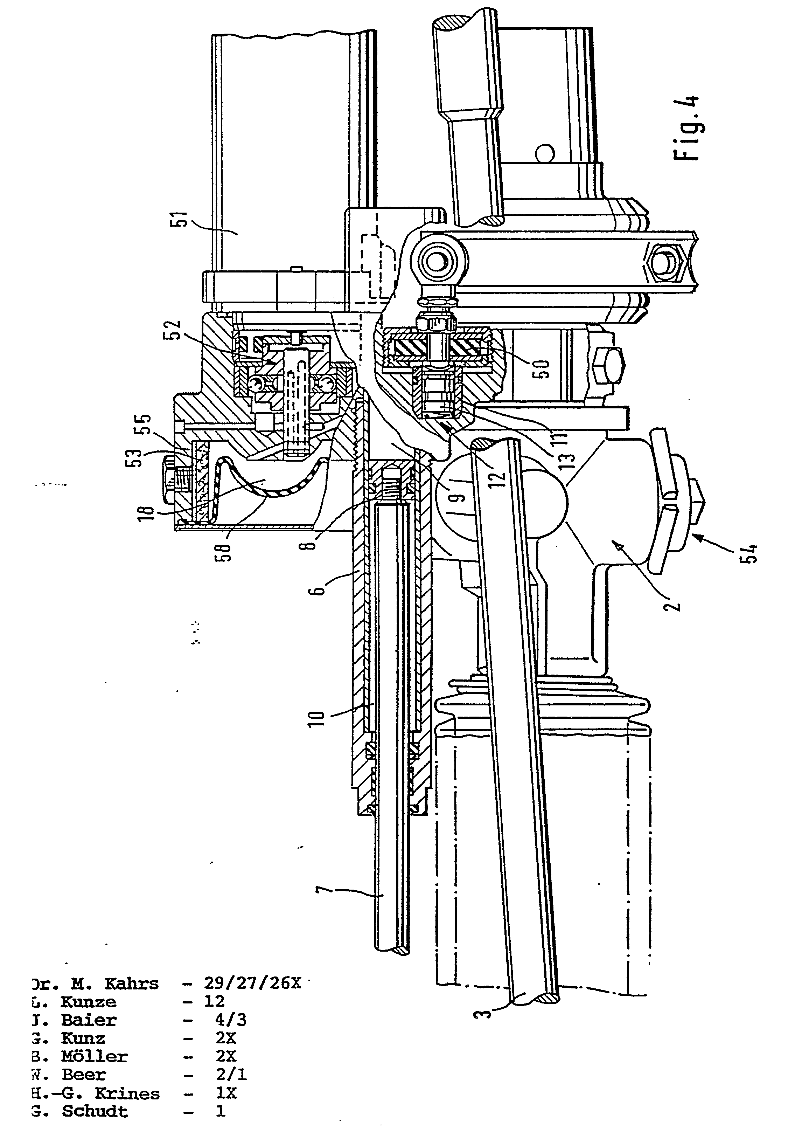

Fig. 4 zeigt eine besonders kompakte Ausführung der Erfindung, welche als integrierte Einheit um das Lenkgetriebe 2 angeordnet ist. Das Lenkgetriebe 2 ist als Zahnstangengetriebe ausgeführt, wobei das mit der Lenkwelle verbundene Antriebsritzel im Gehäuse des Lenkgetriebes gelagert ist und mit der Zahnstange in Eingriff steht. Mittels einer Einstellvorrichtung 54 läßt sich ein die Zahnstange beaufschlagendes Druckstück derart einstellen, das eine Spielfreiheit zwischen Zahnstange und Antriebsritzel besteht. Die Zahnstange ist auf der in der Zeichnung linken Seite aus dem Gehäuse des Lenkgetriebes 2 herausgeführt. An diesem - nicht dargestellten -herausgeführten Ende sind die Kolbenstange 7 und die beiden Spurstangen 3 angeflanscht. Die in der Fig. 4 dargestellte Spurstange ist mit dem Lenkhebel des linken Vorderrades verbunden. Das Lenkgetriebe 2 ist mit dem Fahrzeugaufbau in Querrichtung elastisch verschiebbar verbunden; die Hydraulikeinheit ist dagegen starr mit dem Gehäuse des Lenkgetriebes 2 verbunden.

Die Hydraulikeinheit weist eine von einem Elektromotor 51 angetriebene Radialkolbenpumpe 52 auf, welche als vormontierter Pumpeneinsatz in den Zwischenflansch 55 eingebaut ist und in bekannter Weise über einen feststehenden Steuerzapfen Druckmittel aus dem Behälter 18 in eine nicht dargestellte, mit dem Steuerventil 12 und der Arbeitskammer 10 verbundene und im Zwischenflansch 55 vorgesehene Verbindungbohrung fördert.

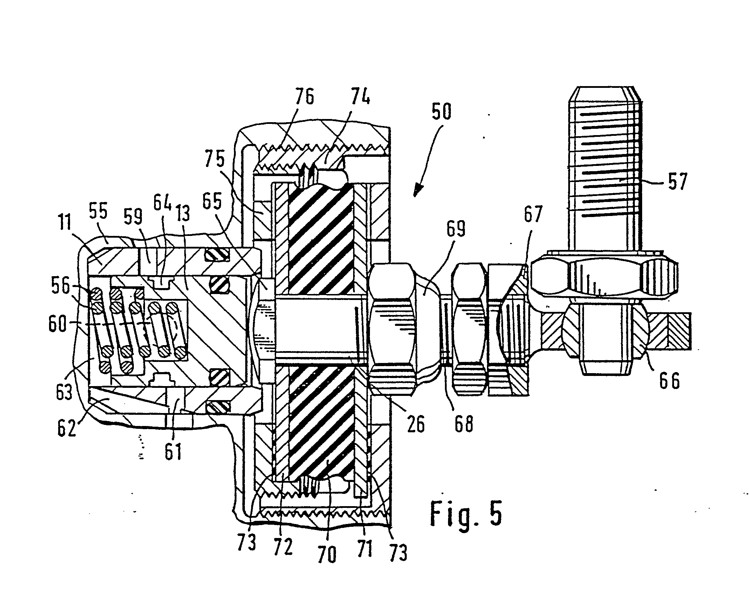

Das Gehäuse 11 des Steuerventils 12 ist im Zwischenflansch 55 befestigt. Der Steuerschieber 13 ist, wie aus Fig. 5 noch deutlicher hervorgeht, von einer Stirnseite aus mit Schraubenfedern 56 beaufschlagt, welche ihn in Anlage an den Reaktionsstab 26 halten. Der Reaktionsstab 26 ist mittels der Schraube 57 am Fahrzeugaufbau befestigt.

Die Funktionsweise der Ausführung gemäß Fig. 4 entspricht dem prinzipiell derjenigen, die schematisch in Fig. 1 dargestellt ist. So führen vom Steuerventil 12 nicht dargestellte Kanäle zu jeweils einer Arbeitskammer 9, 10.

Der Behälter 18, in welchem ein Filtereinsatz 53 vorgesehen ist, wird von einer Ausgleichsmanschette 58 begrenzt, die stets einen Volumenausgleich garantiert, wodurch sichergestellt ist, daß die Pumpe keine Luft ansaugt. Die Ausgleichsmanschette 58 ist notwendig, da es sich bei dieser Ausführung um ein geschlossenes Hydrauliksystem handelt.

Eine weitere Besonderheit der Ausführung gemäß Fig. 4 liegt in der Erzielung der Vorspannung des Reaktionsstabes 26 bzw. des Steuerschiebers 13. Dies soll anhand Fig. 5 näher erläutert werden, welche einen vergrößerten Ausschnitt aus Fig. 4 zeigt.

Das abgedichtet im Zwischenflansch 55 befestigte Gehäuse 11 des Steuerventils 12 weist drei axial und radial versetzte Steuerbohrungen 59.60.61 auf. Durch entsprechende Kanäle im Zwischenflansch ist entsprechend dem in Fig.1 gezeigten Schaltschema die Steuerbohrung 59 mit der Druckseite der Radialkolbenpumpe und der Arbeitskammer 10 verbunden. Die Steuerbohrung 60 führt zur Arbeitskammer 9, während die Steuerbohrung 61 an den Behälter 18 angeschlossen ist. Über die Nut 62 im Gehäuse 11 ist die Kammer 63, in welcher die Schraubenfedern 56 angeordnet sind, ebenfalls mit dem Behälter verbunden. Der Steuerschieber 13 ist mit einer gestuften Ringnut 64 versehen, durch welche die Steuerkanten gebildet werden. Durch die sich radial nach außen erweiternde Stufe der Ringnut 64 wird eine weiche Schaltcharakteristik erreicht.

Die der Kammer 63 gegenüberliegende Stirnseite des Steuerschiebers 13 liegt an dem nach außen gewölbten Kopfteil 65 des Reaktionsstabes 26 an. Der Reaktionsstab 26 ist mittels der Schraube 57 mit dem Fahrzeugaufbau fest verbunden. Durch die Lagerung der Schraube 57 im Reaktionsstab 26 über eine kugelförmige Buchse 66 ist der Winkel zwischen der Schraube 57 und dem Reaktionsstab 26 variierbar, wodurch ein Verspannen oder Verklemmen vermieden wird. Die Buchse 66 ist in einem Kupplungsstück 67 gehalten, welches auf dem Gewindeabschnitt 68 des Reaktionsstabes 26 aufgeschraubt ist. Hierdurch kann eine grobe Längenanpassung an die Einbauverhältnisse erfolgen. Nach der Einstellung wird das Kupplungsstück 67 durch eine Kontermutter verspannt. Die Einstellmutter 69 ist ebenfalls auf dem Gewindeabschnitt 68 aufgeschraubt. Mit der Einstellmutter 69 wird die Vorspannung des Dämpfungselementes 50 eingestellt, welches sich zwischen dieser und dem Kopfteil 65 befindet.

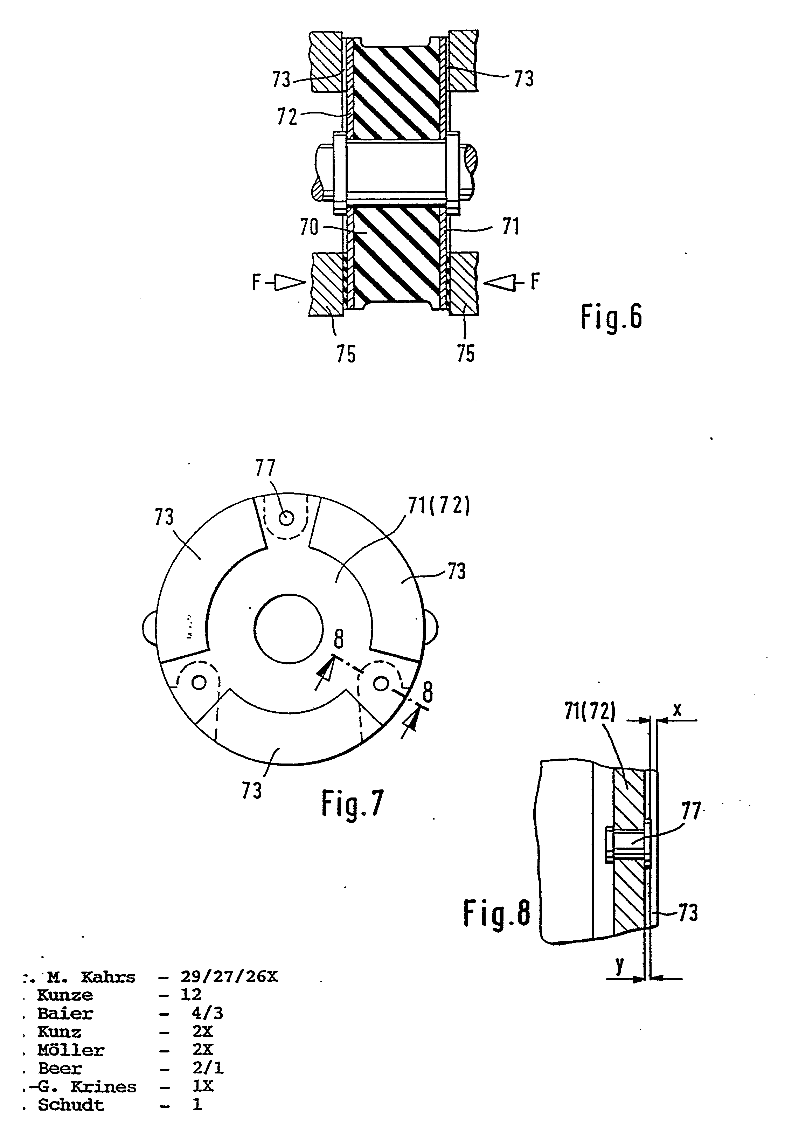

Das Federelement 50 setzt sich aus dem elastomeren Block 70, den Platten 71,72 den elastischen Abschnitten 73 sowie den beiden Gehäuseteilen 74.75 zusammen. Zum besseren Verständnis ist der Aufbau des Federelementes 50 in den Figuren 6 bis 8 detailliert dargestellt.

Die Vorspannung des elastomeren Blocks 70 wird durch das axiale Zusammenpressen der Platten 71,72, welche jeweils an einer Stirnseite des ringförmigen elastomeren Blockes angeordnet sind, durch die Einstellmutter 69 erreicht. An den dem Dämpfungsblock 70 gegenüberliegenden Stirnseiten der Platten 71,72 sind elastische Abschnitte 73 vorgesehen, welche jeweils an einem der beiden Gehäuseteilen 74,75 anliegen, die das Dämpfungselement umgeben. Das Gehäuseteil 75 weist an seiner radialen Mantelfläche ein Außengewinde auf, mit welchem es in das Innengewinde des Gehäuseteils 74 einschraubbar ist. Durch diese Verschraubung wird eine spielfreie Anlage oder auch Vorspannung der elastischen Abschnitte zwischen den beiden Gehäuseteilen 74,75 eingestellt. Mit dem Außengewinde 76 ist das Gehäuseteil 74 in den Zwischenflansch 55 einschraubbar, womit die axiale Lage des Reaktionsstabes 26 und des Steuerschiebers 13 eingestellt werden kann.

Zum Schalten der Radialkolbenpumpe 52 sind im Federelement 50 Schaltkontakte 77 angeordnet, welche an den Platten 71,72 befestigt sind. Die Schaltkontakte 77 ragen axial um das Maß Y über die Platte 71 bzw. 72 in Richtung der jeweiligen Gehäusehälfte heraus. Nachdem sich die elastischen Abschnitte 73 um den Betrag X komprimiert haben, wird der Kontakt durch Anlage des Schaltkontaktes 77 an der jeweiligen Gehäusehälfte geschlossen.

Die elastischen Abschnitte 73 dienen auch der Geräuschdämpfung durch Vermeidung von Körperschall und der Dämpfung mechanischer Stöße in der Lenkung.

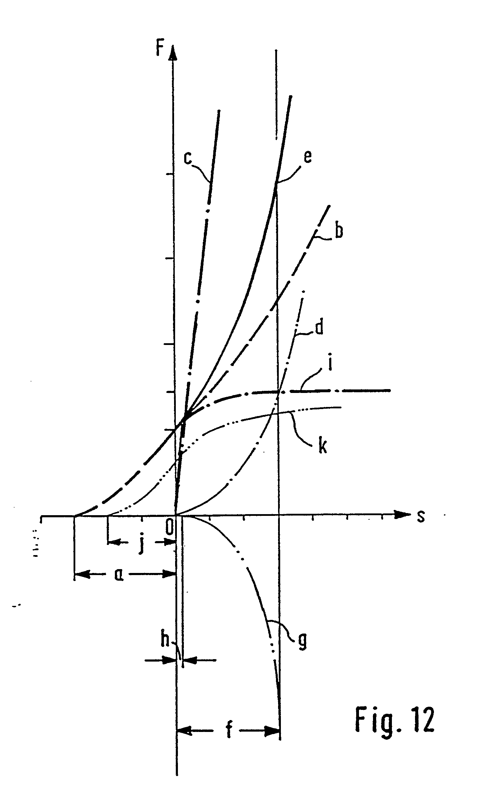

Zum besseren Verständnis der Wirkungsweise des Federelementes 50 innerhalb der erfindungsgemäßen Ausführungsformen wird auf Figur 12 verwiesen, welche ein Kräfte- bzw. Federdiagramm zeigt. Dabei ist auf der Abszisse die Verschiebung des Lenkgetriebes in Querrichtung aufgetragen, die Ordinate gibt die jeweils aufzuwendenden Kräfte an.

Die Kurve b gibt die Steifigkeit des vorgespannten elastomeren Blocks 70 an, dessen Vorspannung durch das Zusammenpressen um das Maß a erreicht wird. Die Gerade c zeigt die Steifigkeit der elastischen Abschnitte 73. Die Kurve d zeigt die Steifigkeit der Lagerung mit welcher das Lenkgetriebe 2 am Fahrzeugaufbau 5 querverschieblich befestigt ist. Die Kurve e ergibt sich aus der Summe der Kurven b und d und ist somit die Gesamtquersteifigkeit, welche überwunden werden muß, um das Lenkgetriebe bis zum maximalen Verschiebeweg f zu verschieben. Die Kurve e beschreibt die Kraftentfaltung des Arbeitszylinders, welche die Muskelarbeit des Lenkers unterstützt. Die Pumpe wird nach Verschieben des Lenkgetriebes um den Betrag h geschaltet. Subtrahiert man die Kraftentfaltung g des Arbeitszylinders von der Gesamtsteifigkeit in Querrichtung e, so erhält man die Kurve i, welche die vom Fahrer aufzuwendende Kraft angibt. Nach Erreichen des nmaximalen Verschiebeweges f des Lenkgetriebes bleibt die vom Fahrer aufzuwendende Muskelkraft konstant. Soll die vom Fahrer aufzubringende Kraft verringert werden, so läßt sich dies beispielsweise durch eine geringere Vorspannung des elastomeren Blockes 70 erreichen. Wird dieser nämlich nur um das Maß j vorverformt, so ergibt sich die Kurve k als Kennlinie der vom Fahrer aufzubringenden Muskelkraft.

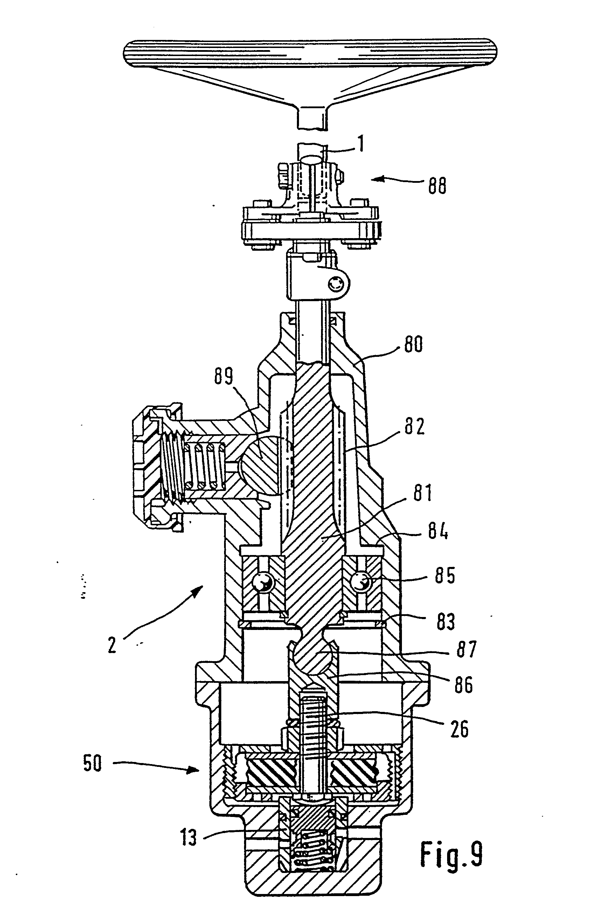

Eine Ausführung der Erfindung gemäß Fig. 9 kommt in erster Linie dann zur Anwendung, wenn eine querelastische Lagerung des Lenkgetriebes am Fahrzeugaufbau nicht möglich ist. In diesem Fall wird als Steuergröße, welche den Steuerschieber 13 betätigt, die Relativbewegung zwischen der Lenkwelle und ihrem Gehäuse 80 benutzt. Gemäß Fig. 9 ist hierzu das Gehäuse 80 des Lenkgetriebes 2 fest mit dem Fahrzeugaufbau verbunden. Das Lenkgetriebe 2 ist als Zahnstangenlenkung mit Schrägverzahnung ausgeführt. Der Abschnitt 81 der Lenkwelle 1, welcher das Antriebsritzel 82 trägt, ist axial verschiebbar im Gehäuse 80 gelagert. Die axiale Verschiebbarkeit wird dadurch erreicht, daß der Außenring eines auf der Lenkwelle axial fixierten Kugellagers 85 auf einer Gleitfläche zwischen den Anschlägen 83, 84 geführt ist. Der Abschnitt 81 der Lenkwelle 1 ist gelenkig mit einem Verbindungsglied 86 verbunden. Hierzu ist das Verbindungsglied pfannenartig mit dem kugelförmig ausgebildeten Ende 87 des Abschnitts 81 verstemmt. In dem Verbindungsglied 86 ist der Reaktionsstab 26 eingeschraubt, welcher ähnlich wie in Fig. 5 dargestellt am Steuerschieber 13 anliegt und über das gefesselte Federelement 50 elastisch mit dem Gehäuse 80 verbunden ist. Zum Ausgleich des axialen Hubes des Abschnittes 81 der Lenkwelle ist dieser über eine Ausgleichsvorrichtung 88 mit dem Lenkrad verbunden.

Wird das Lenkrad vom Fahrer in eine Richtung gedreht, so wird diese Drehbewegung des Antriebsritzels 82 in eine Axialbewegung der Zahnstange 89 umgesetzt. Durch die Schrägverzahnung wird je nach Drehrichtung des Lenkrades eine axiale Kraftkomponente des Abschnittes 81 wirksam, welche eine Axialverschiebung des Abschnittes 81 zur Folge hat, bis der Außenring des Kugellagers 85 entweder am Anschlag 84 oder am Anschlag 83 anliegt. Auf diese Weise wird in Abhängigkeit von der Lenkrichtung der Steuerschieber 13 beaufschlagt. Die oben gemachten Erläuterungen der Funktionsweise, insbesondere anhand der Fig. 12 gelten auch für diese Ausführungsform. Aus Gründen der Übersichtlichkeit ist die hydraulische Einheit bis auf das Steuerventil 12 in Fig. 9 nicht dargestellt.

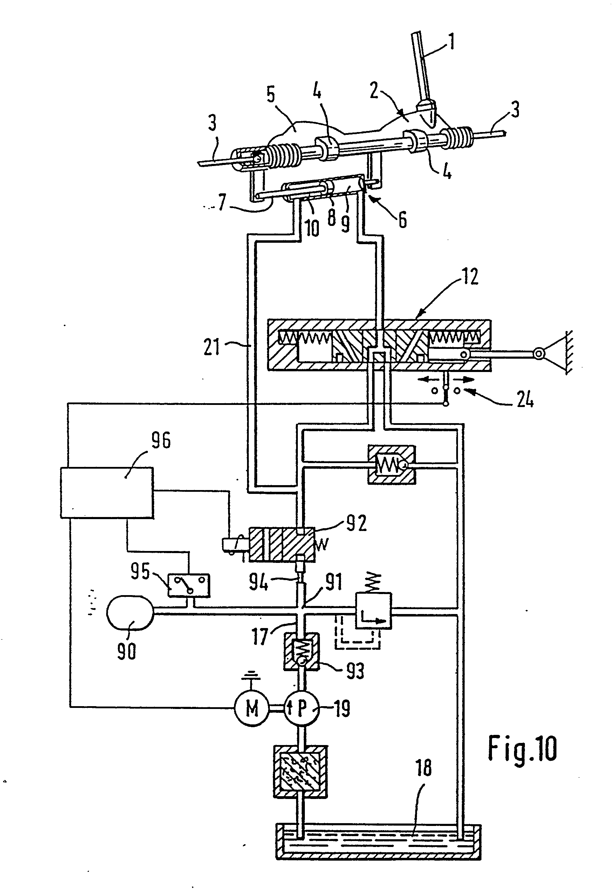

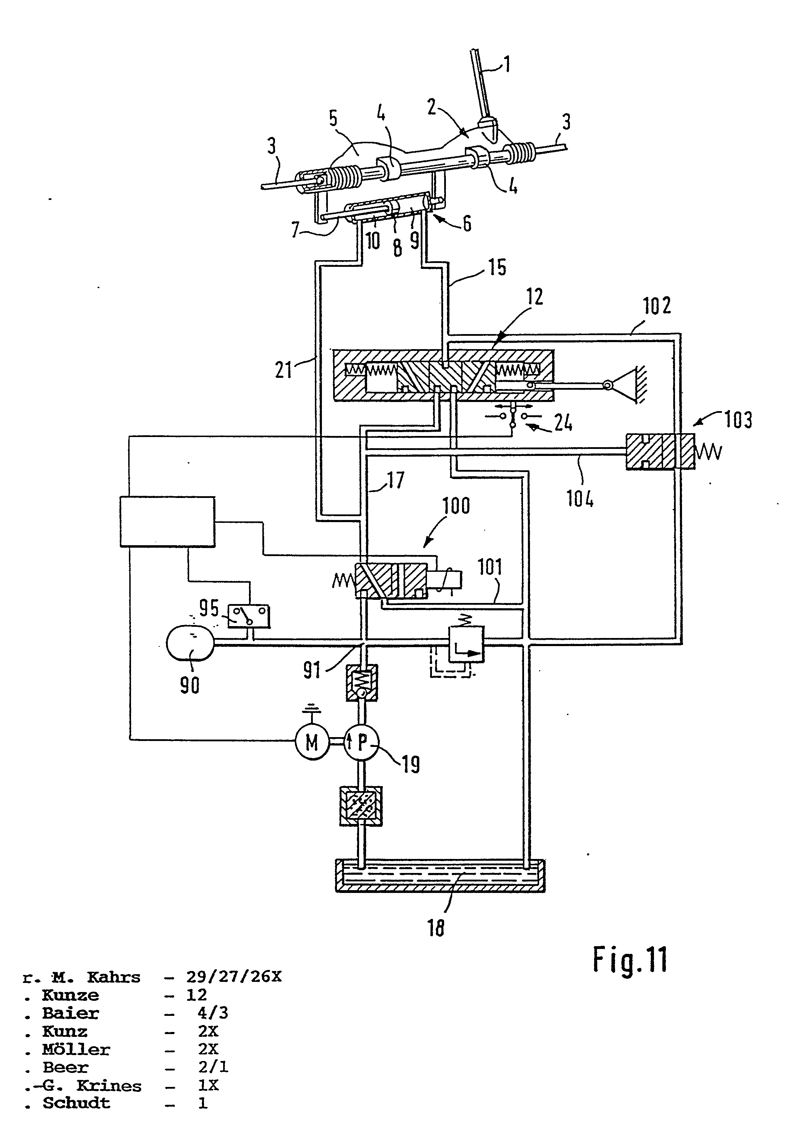

Die Figuren 10 und 11 zeigen Ausführungsformen der Erfindung, bei denen zur Deckung des Druckmittelbedarfes ein Speicher an die hydraulische Einheit angeschlossen ist. Dies ist insbesondere dann empfehlenswert, wenn aus Energie- oder Kostengründen die Leistungsaufnahme der Pumpe bzw. des Elektromotors beschränkt ist. Die Ausführung gemäß Fig. 10 entspricht in Aufbau und Funktion im wesentlichen der in Fig. 1 dargestellten Version, jedoch ist an die Verbindung 17 zwischen Pumpe und Steuerventil 12 bzw. an die Verbindung 21, welche die Pumpe mit der Arbeitskammer 10 verbindet, ein Druckspeicher 90 an den Knotenpunkt 91 angeschlossen. Zwischen dem Knotenpunkt 91 und der Anschlußstelle der Druckmittelleitung 21 an die Verbindung 17 ist ein stromlos geschlossenes Schaltventil 92 geschaltet. Zwischen der Pumpe 19 und dem Knotenpunkt 91, an den auch das Druckbegrenzungsventil 23 angeschlossen ist, ist ein Rückschlagventil 93 vorgesehen, welches die Durchflußrichtung vom Knotenpunkt 91 zur Pumpe 19 sperrt. Zwischen dem Knotenpunkt 91 und dem Schaltventil 92 ist eine Drossel 94 angeordnet.

Ein vom Druck des Druckspeichers 90 beaufschlagter Druckschalter 95 schaltet bei Druckabfall über die elektrische Steuerung 96 die Pumpe 19 ein. Das Schaltventil 92 ermöglicht in geschlossener Schaltstellung einen Druckaufbau im Druckspeicher 90, da letzterer sonst durch die Ausführung des Steuerventils 12 als mittig offenes Steuerventil stets mit dem Behälter 18 verbunden wäre.

Wird durch Einleitung einer Lenkbewegung durch den Fahrer der elektrische Schalter 24 betätigt, so wird sowohl die Pumpe 19 als auch das Schaltventil 92 geschaltet, so daß eine Verbindung zwischen dem Knotenpunkt 91 und der Arbeitskammer 10 bzw. dem Steuerventil 12 hergestellt ist. Eine besonders ökonomische, da mit sehr geringen Leckverlusten behaftete Ausführungsform der Erfindung sieht ein mittig geschlossenes Steuerventil 12 vor, wie es in Fig. 11 dargestellt ist. Diese Ausführung entspricht im wesentlichen der in Fig. 10 gezeigten, jedoch ist statt des Schaltventils 92 ein 3/2-Wegeventil 100 eingesetzt, welches in stromlosem Zustand die Verbindung zwischen dem Knotenpunkt 21 und dem Steuerventil 12 bzw. der Arbeitskammer 10 unterbricht, jedoch die Druckmittelleitung 21 über die Verbindung 101 an den Behälter 18 anschließt. An die Verbindung 15 zwischen dem Steuerventil 12 und der Arbeitskammer 9 ist eine Leitung 102 angeschlossen, welche ebenfalls zum Behälter 18 führt. In diese Leitung 102 ist ein hydraulisch schaltbares Sperrventil 103 geschaltet, welches im unbetätigten Zustand geöffnet ist. Geschaltet wird dieses Sperrventil 103 durch eine Steuerleitung 104, welche an die Verbindung 17 angeschlossen ist.

Wie auch bei der Ausführung gemäß Fig. 10 wird bei Druckabfall im Druckspeicher 90 die Pumpe 19 mittels des Druckschalters 95 eingeschaltet. Bei einer Lenkbetätigung schaltet der elektrische Schalter 24 sowohl die Pumpe als auch das 3/2-Wegeventil 100. In dieser Schaltstellung ist der Durchgang von der Verbindung 17 zur Verbindung 101 geschlossen, die Verbindung vom Knotenpunkt 21 zum Steuerventil 12 bzw. zur Arbeitskammer 10 geöffnet. Durch den sich aufbauenden Druck in der Verbindung 17 wird das Sperrventil 103 geschlossen. Selbstverständlich wird bei der Lenkbetätigung wie oben beschrieben, auch der Steuerschieber 13 betätigt, der die Druckbeaufschlagung der Arbeitskammern 10 und 9 steuert. Bei einer Lenkung mit sehr niedriger Lenkkraft, bei der der elektrische Schalter 24 nicht betätigt wird, ist durch die Verbindung der Arbeitskammern 9,10 über das Sperrventil 103 bzw. das 3/2-Wegeventil 100 mit dem Behälter 18 ein druckloses Verschieben des Druckmittels von einer Arbeitskammern in die andere möglich.

Wenn beim Lenken der maximale Lenkeinschlag der Räder erreicht ist, wenn also ein Anschlag der Zahnstange am Gehäuse des Lenkgetriebes zum Anliegen kommt, so tritt eine sogenannter Kraftkurzschluß ein, d.h. es wird keine Reaktionskraft mehr in der elastischen Aufhängung des Lenkgetriebes 2 am Aufbau 5 wirksam. Dadurch wird das Steuerventil 12 in seine Mittelstellung gebracht und die hydraulische Hilfskraft wird ausgeschaltet.

Sollte sich ein Rad an einem "äußeren Anschlag" anlegen - z.B. an einem Bordstein -, so wird die auf das Federelement 50 ausgeübte Kraft stark ansteigen. Bei einer Ausführung gemäß Fig. 5 wird sich z.B. bei einer Lenkrichtung, welche den Reaktionsstab 26 vom Steuerschieber 13 wegbewegt, der elastische Block 70 sehr stark komprimiert. Dabei wird der Steuerschieber 13 durch Schraubenfedern 56 stets nachgeführt. Dies geschieht so lange, bis die der Kammer 63 zugewandte Stirnseite des Steuerschiebers 13 einer Verbindung der Steuerbohrung 59 zur Kammer 63 und damit zum Behälter freigibt. Durch diese Maßnahme, welche durch eine genau definierte und ausgelegte Geometrie des Steuerschiebers 13 einstellbar ist, ist eine Druckbegrenzung des Systems hergestellt. Für eine Verschiebung in die Gegenrichtung ist die gleiche Maßnahme vorgesehen, jedoch in Fig. 5 nicht dargestellt.

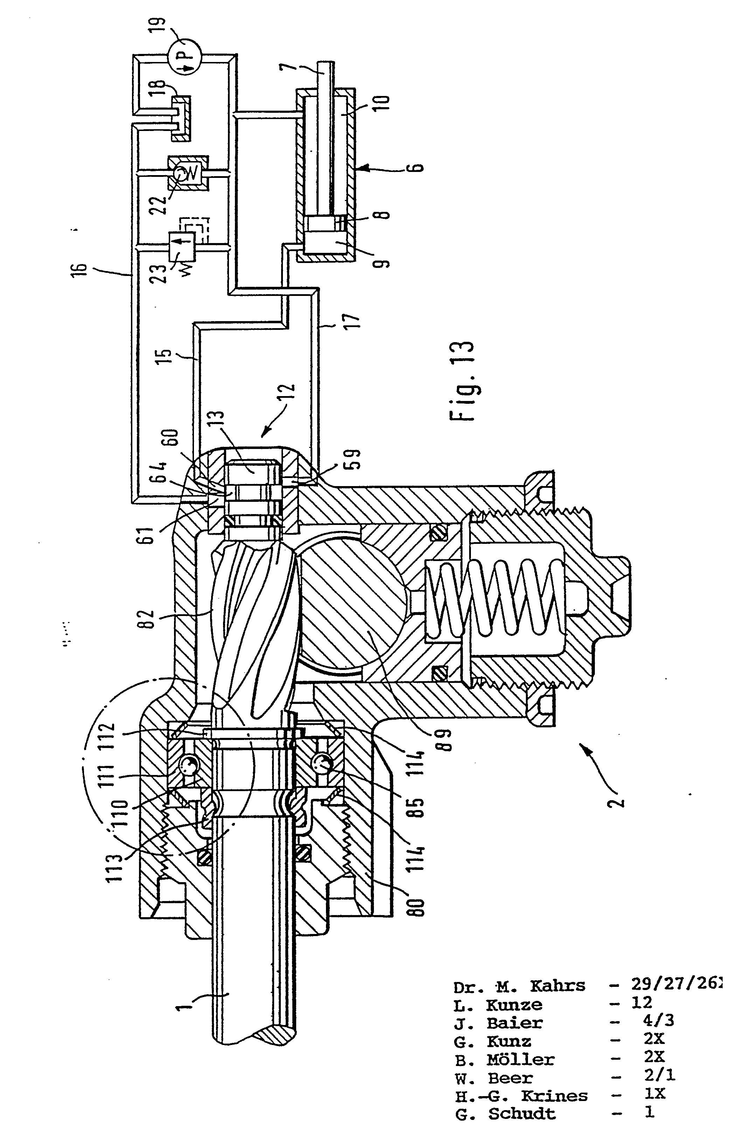

Die in Fig. 13 dargestellte Ausführungsform besteht aus einem Lenkgetriebe 2, in welchem ein Abschnitt der Lenkwelle 1, welcher ein Antriebsritzel 82 aufweist, axial verschiebbar gelagert ist und in Eingriff mit der Zahnstange 89 steht. Die Zahnstange 89 ist auf nicht dargestellte Weise mit den Spurstangen der Vorderräder eines Kraftfahrzeuges verbunden. An dem der Lenkwelle 1 gegenüberliegenden Ende des Antriebsritzels 82 ist der Steuerschieber 13 des Steuerventils 12 koaxial mit der Antriebswelle angeformt. Der Steuerschieber 13 weist eine Ringnut 64 auf und ist gegenüber dem Antriebsritzel 82 abgedichtet in einer in das Gehäuse 80 des Lenkgetriebes eingesetzten Steuerbuchse gelagert. Die Steuerbuchse weist Radialbohrungen auf, welche nach außen an die Steuerbohrungen 59, 60 bzw. 61 angeschlossen sind, wobei die Verbindung dieser Steuerbohrungen untereinander durch die Stellung des Steuerschiebers 13 bestimmt wird. Entlang der axialen Erstreckung der Steuerbuchse ist die Steuerbohrung 60 zwischen den beiden anderen Steuerbohrungen 59 und 61 angeordnet.

Die Steuerbohrung 59 ist über die Verbindung 17 mit der Druckseite einer Pumpe 19 verbunden, an welche Verbindung auch die Arbeitskammer 10 des Arbeitszylinders 6 angeschlossen ist. Der Arbeitszylinder 6 ist als Differentialzylinder mit einem Kolben 8 und einer einseitig aus dem Zylinder herausgeführten Kolbenstange 7 ausgebildet. Die Kolbenstange 7 besitzt einen Querschnitt, welcher 50% des Querschnitts des Kolbens 8 beträgt. Somit ist die Beaufschlagungsfläche der Arbeitskammer 9, welche der kolbenstangenseitigen Arbeitskammerseite 10 gegenüberliegt, doppelt so groß wie die Beaufschlagungsfläche der Arbeitskammer 10. Die Arbeitskammer 9 ist durch die Verbindung 15 mit der Steuerbohrung 60 verbunden. Die Verbindung 16 schließt den drucklosen Behälter 18 an die Steuerbohrung 61 an. Zwischen der Verbindung 17 und der Verbindung 16 ist ein Überdruckventil 23 angeordnet, welches im Falle eines drohenden Systemüberdrucks Druckmittel in den Behälter abläßt; parallel zu dem Überdruckventil ist ein Nachsaugventil 22 vorgesehen, welches als federbelastetes Rückschlagventil ausgeführt die Strömungsverbindung zwischen der Leitung 17 und der Verbindung 16 sperrt. Das Nachsaugventil 22 dient dazu, Druckmittel in die Arbeitskammer 10 nachsaugen zu können, wenn die Fahrzeuglenkung ohne hydraulische Unterstützung stattfindet, bei einer solchen Lenkungsbetätigung wird der an die Spurstangen angekoppelte Arbeitszylinder 6 mechanisch, d.h. durch die Muskelkraft des Fahrers verschoben, d.h. in diesem Falle die Kolbenstange 7 in den Arbeitszylinder 6 hineinbewegt wird.

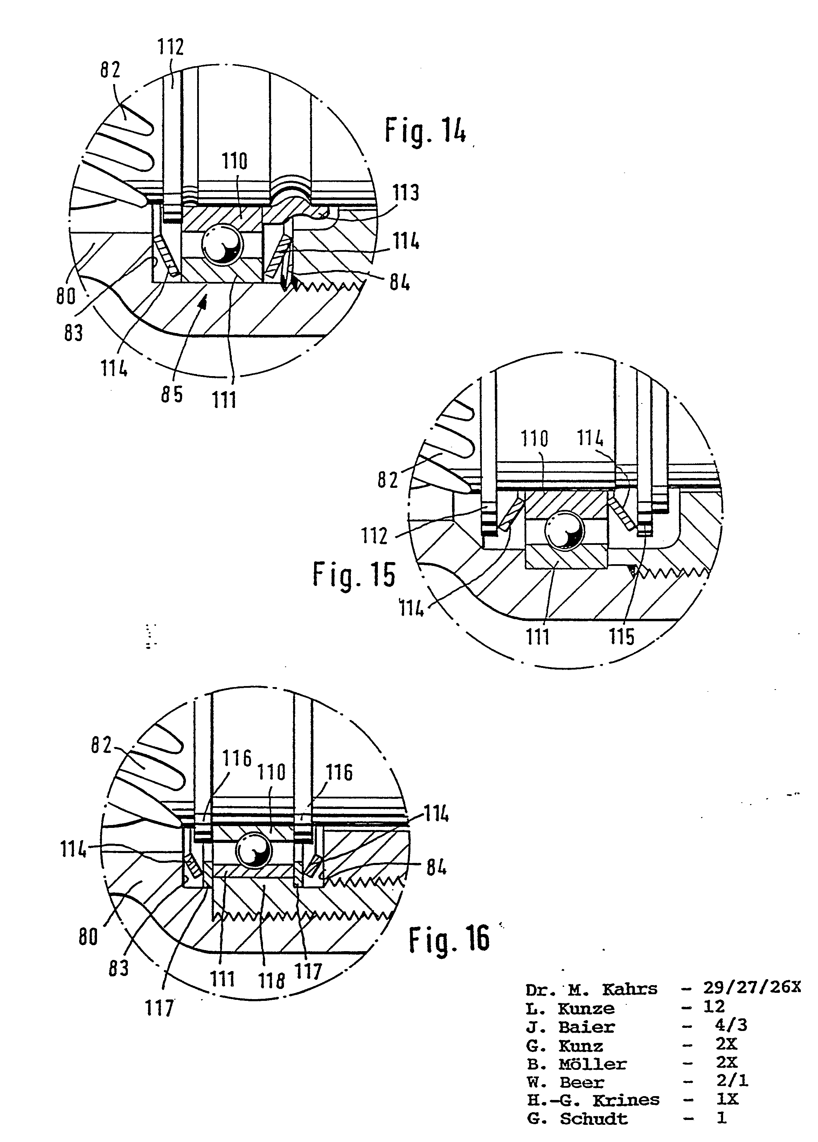

Die Lagerung des Antriebsritzels im Gehäuse 80 des Lenkgetriebes erfolgt über das Kugellager 85 und den quasi als Gleitlager wirkenden Steuerschieber 13. Die Lagerung ist axial verschieblich ausgeführt, indem der Innenring des Kugellagers 85 zwischen einem Bund 112 und einer Befestigungshülse 113 in axialer Richtung auf dem Antriebsritzel 82 fixiert ist, während der Außenring 111 axial begrenzt verschiebbar im Gehäuse 80 gelagert ist. Der Außenring 111 wird stirnseitig durch je eine Tellerfeder 114 beaufschlagt, welche sich an den zugeordneten gehäusefesten Anschlägen 83,84 abstützen. Diese axial bewegliche Lagerung ist in Fig. 14 vergrößert dargestellt.

Fig. 15 zeigt vergrößert eine weitere Variante der axial beweglichen Lagerung, bei welcher der Außenring 111 gehäusefest fixiert ist, während der Innenring 110 vorgespannt durch die Tellerfedern 114, welche sich am Bund 112 bzw. 115 abstützen und axial verschiebbar auf dem Antriebsritzel 82 gelagert ist.

Die axial verschiebbare und vorgespannte Lagerung des Antriebsritzels dient in Verbindung mit der Schrägverzahnung dazu, das Steuerventil 12 und die Pumpe 19 (hierzu sind nicht dargestellte elektrische Verbindungen sowie ein durch das Antriebsritzel betätigter Elektroschalter vorgesehen) erst dann zu betätigen bzw. zu aktivieren, wenn der Fahrer ein bestimmtes Lenkmoment auf die Lenkwelle 1 aufgebracht hat. Die axiale Kraftkomponente auf die Lenkwelle 1 ergibt sich durch die Schrägverzahnung des Antriebsritzels 82. Ist das vom Fahrer aufgebrachte Lenkmoment kleiner als der durch die Tellerfedern 114 vorbestimmte Wert, so wird die Lenkung ohne hydraulische Unterstützung betrieben. Das Druckmittel wird dabei drucklos zwischen den beiden Arbeitskammern 9 und 10 hin und her geschoben.

Bei größerem Lenkmoment wird das Antriebritzel 82 je nach Drehrichtung in das Gehäuse 80 hinein oder herausbewegt, wodurch zum einen der Schalter zum Aktivieren der Pumpe 19 betätigt wird, und zum anderen das Steuerventil 12 bewegt wird, welches die Druckbeaufschlagung und damit die Kraftrichtung des die Hilfskraft erzeugenden Arbeitszylinders 6 steuert.

Die in Fig. 13 dargestellte Lage entspricht einem unbetätigten bzw. mit sehr geringer Handkraft betätigten mittenzentrierten Zustand der Lenkung. Hierbei sind der Druckausgang der Pumpe 19 sowie die beiden Arbeitskammern 9,10 mit dem Behälter 18 verbunden; die Pumpe 19 ist ausgeschaltet. Wird das Antriebsritzel 82 gehäuseeinwärts verschoben, so trennt der mit dem Antriebsritzel verbundene Steuerschieber 13 die mit dem Behälter 18 verbundene Steuerbohrung 61 von den Steuerbohrungen 59 und 60 ab; die Pumpe ist aktiviert und beide Arbeitskammern 9 und 10 werden druckbeaufschlagt.

Durch die Differenz der Beaufschlagungsflächen am Arbeitskolben 8 wird die Kolbenstange 7 aus dem Arbeitszylinder 6 herausbewegt. Wird das Lenkrad in anderer Richtung betätigt, so schiebt sich der Steuerschieber 13 in eine Position, in welcher die Steuerbohrung 59 von den beiden anderen Steuerbohrungen 60,61 abgetrennt ist, wodurch die Arbeitskammer 9 an den Behälter 18 angeschlossen ist; die Pumpe 19 ist eingeschaltet. In diesem Fall wird lediglich die Arbeitskammer 10 mit dem Pumpendruck beaufschlagt, wodurch sich die Kolbenstange 7 in den Arbeitszylinder 6 hineinbewegt. Aufgrund der oben erwähnten geometrischen Abstimmung der Druckbeaufschlagungsflächen am Arbeitskolben 8 ist die Unterstützungskraft in beide Lenkrichtungen gleich groß.

Bei den Lager- bzw. Vorspannungsvarianten gemäß Fig. 13 bis 15 erreicht die auf das Antriebsritzel 82 wirkende effektive Vorspannkraft in Ruhelage den Wert Null, da sich die Kraftkomponenten aus den beiden Tellerfedern 114 aufheben. Zum Aufbau einer Vorspannkraft muß daher erst ein gewisser Weg vom Antriebsritzel 82 zurückgelegt werden, währenddessen die rückwärtige Feder die Bewegung unterstützt. Soll dagegen aus der Ruhelage heraus sofort eine Vorspannkraft wirksam werden, so läßt sich dies durch den Einbau eines gefesselten Federelementes, wie es in Fig. 16 dargestellt ist, realisieren.

Bei dieser Ausführungsform ist der Innenring 110 des Kugellagers 85 durch zwei Befestigungsringe 116 auf dem Antriebsritzel 82 fixiert und der Außenring 111 ist auf einem gehäusefesten nach innen vorspringenden Absatz 118 gelagert, welcher eine axiale Erstreckung besitzt, die der Lagerbreite entspricht. Zwei Scheiben 117 liegen sowohl an der Stirnseite des Außenrings 111 als auch an den Stirnseiten des Absatzes 118 an und sind durch jeweils eine Tellerfeder 114 vorgespannt, welche sich an den gehäusefesten Anschlägen 83, 84 abstützen.

Wird bei dieser Ausführungsform das Antriebsritzel 82 axial aus der Nullage verschoben, so wirkt mit Beginn der Verschiebung lediglich eine der beiden Tellerfedern 144 während bei den Ausführungen gemäß Figuren 13 bis 15 gegen die Kraft einer Feder verschoben wird, wobei die gegenüberliegende Tellerfeder in Bewegungsrichtung unterstützt. Gemäß Fig. 16 fällt diese unterstützende Kraft aus der der Bewegungsrichtung entgegengesetzt gelegenen Tellerfeder aus, da sich diese am Absatz 118 abstützt.

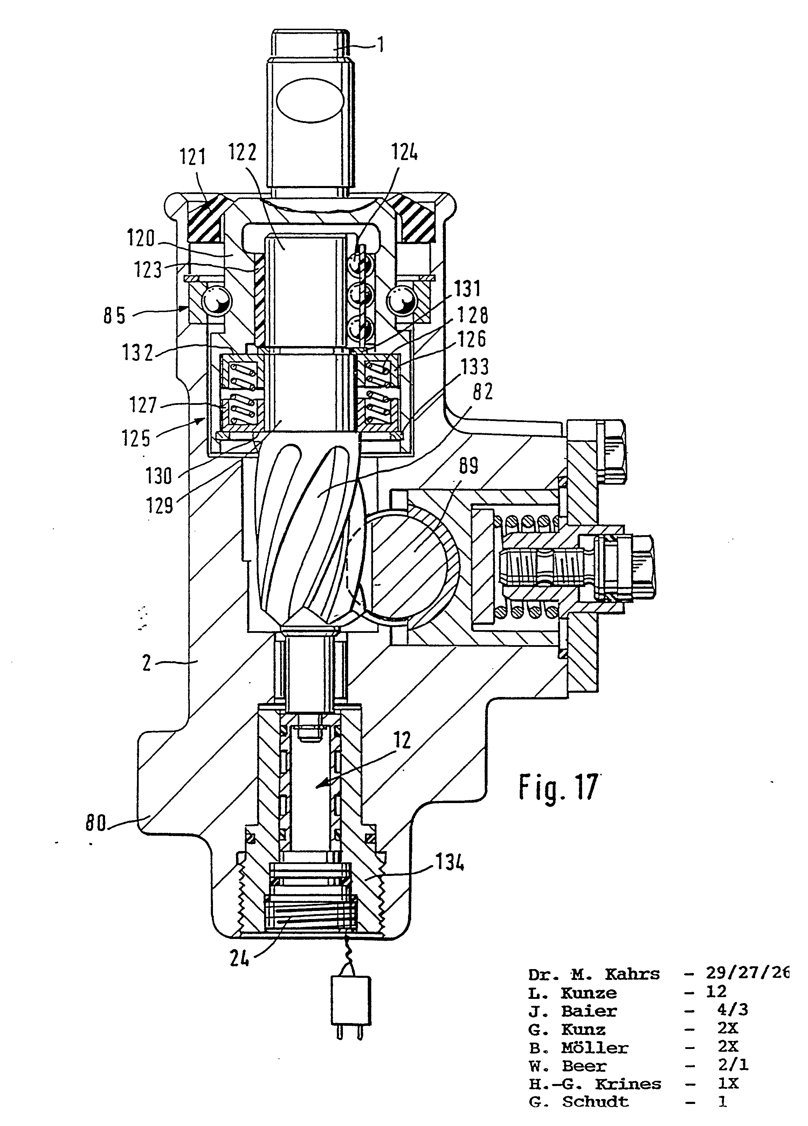

In Fig. 17 ist eine Ausführung eines Lenkgetriebes 2 mit integriertem Steuerventil 12 dargestellt, dessen Aufbau im wesentlichen dem des Lenkgetriebes gemäß Fig. 13 entspricht. Auch bei dieser Ausführung ist ein schrägverzahntes Antriebsritzel 82 axial verschiebbar gelagert und mit dem Steuerventil 12 verbunden, wobei das Antriebsritzel 82 in Eingriff mit der Zahnstange 89 steht. Die axial verschiebbare und vorgespannte Lagerung des Antriebsritzels 82 erfolgt jedoch nicht ausschließlich im Gehäuse 80, sondern in einem Abschnitt 120 der Lenkwelle 1. Diese Ausführung hat den Vorteil, daß die Lenkwelle 1 keiner axialen Bewegung unterworfen ist, wodurch beim Einbau in das Kraftfahrzeug die selbe Lenkwellenkonstruktion angewandt werden kann, wie sie bei einer Lenkungsausführung ohne hydraulische Unterstützung vorgesehen ist; insbesondere braucht keine Ausgleichsvorrichtung für Axialbewegungen in die Lenkwelle 1 eingesetzt werden.

Die Lenkwelle 1 weist einen in das Gehäuse 80 ragenden becherförmigen Abschnitt 120 auf, der mittels eines Kugellagers 85 im Gehäuse 80 axial fixiert gelagert ist. Dabei ist die Außenkontur dieses Abschnittes 120 mit einer gerundeten Umfangsnut versehen, in welcher die Wälzkörper des Kugellagers 85 abrollen, wodurch ein zusätzlicher Lagerinnenring gespart wird.

Der becherförmige Abschnitt 120 ist gestuft ausgeführt und weist auf seiner Innenkontur eine Lagerschale 121 auf. In dieser Lagerschale 121 ist der Lagerzapfen 122 des Antriebsritzels 82 axial verschiebbar auf Kugeln 124 gelagert. Die Kugeln 124 dienen gleichzeitig als Mitnehmerverbindungen zur Übertragung der Drehbewegung der Lenkwelle 1 auf das Antriebsritzel 82.

Sowohl der Lagerzapfen 122 als auch die Lagerschale 121 ist mit jeweils drei gleichmäßig am Umfang verteilten Axialnuten gleicher Breite versehen, in welche jeweils drei Kugeln 124 derart eingesetzt sind, daß sie mit dem Lagerzapfen 122 des Antriebsritzels 82 und dem Abschnitt 120 der Lenkwelle 1 in Eingriff stehen. Um die Abrollbarkeit der einzelnen Kugeln 124 stets sicherzustellen, sind sie in einem Führungskäfig 123 angeordnet. Durch diese axiale Wälzlagerung werden Reibungseinflüsse wie z.B. der "stick-slip-Effekt" sowie Beeinflussung des Ansprechverhaltens der hydraulischen Unterstützung durch Ver- schleiß, Werkstoffpaarung, Schmierzustand usw. ausgeschlossen.

Die axiale Vorspannung des Antriebsritzels 82 wird durch die Zentrierfederanordnung 125 erreicht, welche als gefesseltes Federelement ausgeführt ist. Hierzu sind zwei Stützringe 126,127 vorgesehen, welche beide einen U-förmigen Querschnitt aufweisen, wobei die offenen Seiten dieser Profile einander zugewandt sind. In den Stützringen 126,127 sind am Umfang verteilt mehrere Zentrierfedern 128 angeordnet, welche die beiden Stützringe vorgespannt in einem definierten Abstand zueinander halten.

Die Stützringe 126,127 sind unter axialer Vorspannung und einem axialen Abstand mit ihrem inneren Umfang auf dem Absatz 129 des Antriebsritzels 82 zwischen der Stufe 130 und einem Befestigungsring 131 gelagert. Der äußere Umfang der Stützringes 126,127 ist im Abschnitt 120 der Lenkwelle 1 zwischen einem ringförmig umlaufenden Anschlag 132 und einem weiteren Befestigungsring 133 gelagert. Dabei entsprechen die axialen Abstände zwischen der Stufe 130 und der Befestigung 131 einerseits sowie zwischen dem Anschlag 132 und dem Befestigungsring 133 andererseits einander.

An dem dem Lagerzapfen 122 gegenüberliegenden Ende des Antriebsritzels 82 ist der Steuerschieber des Steuerventils 12 angeordnet, welcher sich in die Ventilhülse 134 hineinerstreckt, welche wiederum mit nicht dargestellten Steuerbohrungen versehen ist. Durch den Steuerschieber des Steuerventils 12 ist der elektrische Schalter 24 betätigbar, welcher die Pumpe ein- bzw. ausschaltet. Die Funktion der beschriebenen Anordnung entspricht der Ausführung gemäß Fig. 13, wobei der Übersichtlichkeit halber der hydraulische Teil der Hilfskraftlenkung nicht dargestellt ist.

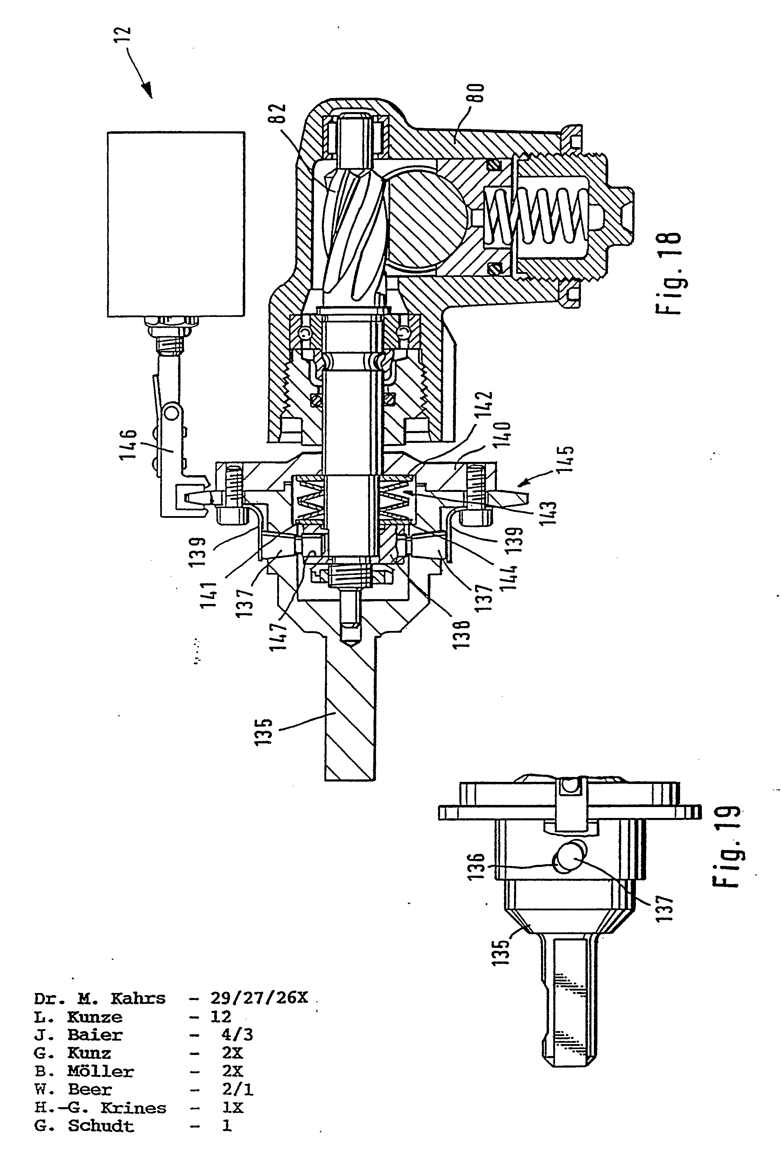

Sind bei den bisher beschriebenen Ausführungsformen der Erfindung schrägverzahnte Antriebsritzel Grundvoraussetzung für die Funktion, so ist bei dem Ausführungsbeispiel gemäß Fig. 18 ein geradverzahntes Antriebsritzel vorgesehen. Dieses geradeverzahnte Antriebsritzel 82 ist auf bekannte Weise axial fixiert im Gehäuse 80 gelagert. Auf dem gestuft ausgeführten und aus dem Gehäuse 80 herausragenden Teil des Antriebsritzels 82 ist ein glockenartig ausgeführter Lenkwellenabschnitt 135 axial verschiebbar gelagert. Der Lenkwellenabschnitt 135 weist zwei schräg zum Umfang bzw. zur Radialebene verlaufende Kulissenführungen 136 auf, welche insbesondere in Fig. 19 deutlich zu erkennen sind. In die Kulissenführungen 136 sind Übertragungsbolzen 137 eingesetzt, deren radial nach innen weisende Endabschnitte in Bohrungen 147 der Nabe 138 eingreifen, welche drehfest und axial fixiert mit dem Antriebsritzel 82 verbunden ist. Die langlochartige Kulissenführung 136 besitzt Begrenzungsflächen, welche sich vom Außenumfang des Lenkwellenabschnittes 135 zur Innenkontur dieses Abschnittes verjüngen. Der Übertragungsbolzen 137 ist in diesem Bereich konisch ausgeführt, während der fest in der Nabe 138 angeordnete Bolzenabschnitt zylindrisch ist. Die Übertragungsbolzen 137 werden in Richtung ihrer Längsachse durch je eine Blattfeder 139 in Richtung der Nabe 138 vorgespannt.

Der glockenförmige Lenkwellenabschnitt 135 ist auf seiner dem Gehäuse 80 zugewandten Seite durch die Ringplatte 140 geschlossen, welche mit ihrem Innenumfang auf dem Antriebsritzel 82 gelagert ist. Der Lenkwellenabschnitt 135 ist gegenüber dem Antriebsritzel 82 in axialer Richtung gefesselt vorgespannt, wozu ein Tellerfederpaket 143 dient, welches vorgespannt zwischen den Scheiben 141 und 142 angeordnet ist.

Die Scheibe 141 stützt sich sowohl an der Nabe 138 als auch am Absatz 144 des Lenkwellenabschnitts 135 ab; die Scheibe 142 liegt an der Ringplatte 140 und einer Stufe des Antriebsritzels 82 an.

Der Lenkwellenabschnitt 135 besitzt einen umlaufenden radial nach außen weisenden Bund 145, welcher von einem gabelförmigen Betätigungselement 146 des Steuerventils 12 umgriffen wird. Das Steuerventil 12 weist auch einen elektrischen Schalter auf und ist sowohl elektrisch als auch hydraulisch auf die bereits anhand Fig. 13 beschriebene Weise an Pumpe, Behälter, Arbeitszylinder usw. angeschlossen.

Wird die Lenkwelle und damit der Lenkwellenabschnitt 135 vom Fahrer durch ein Lenkmoment aus seiner mittenzentrierten Lage heraus beaufschlagt, so wird dieses Moment durch die Übertragungsbolzen 137 dem Antriebsritzel 82 zugeführt. Durch die schrägen Kulissenführungen 136 wird eine lenkmomentabhängige Axialkraftkomponente auf den Lenkwellenabschnitt 135 wirksam, welcher den Lenkwellenabschnitt 135 gegen die Vorspannkraft des Tellerfederpaketes 143 relativ zum Antriebsritzel 82 zu verschieben trachtet. Sobald diese Axialkraft die Vorspannkraft des Tellerfederpaketes 143 überschreitet, wird der Lenkwellenabschnitt je nach Drehrichtung zum Gehäuse 80 hin oder von diesem weg bewegt und beaufschlagt durch diese Bewegung über den Bund 145 das Betätigungselement 146 des Steuerventils 12. Dadurch wird, wie oben beschrieben, die Pumpe 19 aktiviert und die Druckbeaufschlagung der einzelnen Arbeitskammern des Arbeitszylinders 6 gesteuert.

Die eben geschilderte Ausführungsform läßt sich auf einfache Weise einer bereits vorhandenen rein mechanischen Lenkung zufügen, ohne daß Änderungen am Lenkgetriebe oder an einem anderen Teil der mechanischen Lenkung vorgenommen werden müssen.

Bezugszeichenliste

1 Lenkwelle
2 Lenkgetriebe
3 Spurstange
4 Schelle
5 Fahrzeugaufbau
6 Arbeitszylinder
7 Kolbenstange
8 Arbeitskolben
9 Arbeitskammer
10 Arbeitskammer
11 Gehäuse
12 Steuerventil
13 Steuerschieber
14 Feder
15 Verbindung
16 Verbindung
17 Verbindung
18 Behälter
19 Pumpe
20 Knotenpunkt
21 Druckmittelleitung
22 Nachsaugventil
23 Überdruckventil
24 elektrischer Schalter
25 Relais
26 Reaktionsstab
30 Kanal
31 Kanal
31 Kanal
32 Rückschlagventil
33 Rückschlagventil
34 Druckmittelverbindung
35 Druckmittelverbindung
36 Pumpe
37 Anlenkpunkt

38 Zentrierkammer
39 Anschlag
40 Anschlag
41 Stützplatte
42 Stützplatte
43 Druckfeder
44 Anschlagfläche
45 Anschlagfläche
50 Federelement
51 Elektromotor
52 Radialkolbenpumpe
53 Filtereinsatz
54 Einstellvorrichtung
55 Zwischensflansch
56 Schraubenfeder
57 Schraube
58 Ausgleichsmanschette
59 Steuerbohrung
60 Steuerbohrung
61 Steuerbohrung
62 Nut
63 Kammer
64 Ringnut
65 Kopfteil
66 Buchse
67 Kupplungsstücxk
68 Gewindeabschnitt
69 Einstellmutter
70 Block
71 Platte
72 Platte
73 elastischer Abschnitt
74 Gehäuseteil
75 Gehäuseteil
76 Außengewinde
77 Schaltkontakt
80 Gehäuse
81 Abschnitt
82 Antriebsritzel
83 Anschlag
84 Anschlag
85 Kugellager
86 Verbindungglied
87 Ende
88 Ausgleichsvorrichtung
89 Zahnstange
90 Druckspeicher
91 Knotenpunkt
92 Schaltventil
93 Rückschlagventil
94 Drossel
95 Druckschalter
96 Steuerung
100 3/2-Wegeventil
101 Verbindung
102 Leitung
103 Sperrventil
104 Steuerleitung

110 Innenring
111 Außenring
112 Bund
113 Befestigungshülse
114 Tellerfeder
115 Bund
116 Befestigungsring
117 Scheibe
118 Absatz
120 Abschnitt
121 Lagerschale
122 Lagerzapfen
123 Führungskäfig
124 Kugel
125 Zentrierfederanordnung
126 Stützring
127 Stützring
128 Zentrierfeder
129 Absatz
130 Stufe
131 Befestigungsring
132 Anschlag
133 Befestigungsring
134 Ventilhülse
135 Lenkwellenabschnitt
136 Kulissenführung
137 Übertragungsbolzen
138 Nabe
139 Blattfeder
140 Ringplatte
141 Scheibe
142 Scheibe
143 Tellerfederpaket
144 Absatz
145 Bund
146 Betätigungselement
147 Bohrung

## Ansprüche

1. Hydraulische Hilfskraftlenkung für Kraftfahrzeuge, wobei die hydraulische Unterstützung lediglich oberhalb einer vorgegebenen Lenkkraft erfolgt, mit einem an eine mechanische Lenkung gekoppelten Arbeitszylinder, einer Pumpe und mindestens einem Steuerventil, dadurch **gekennzeichnet**, daß eine durch die Lenkkraft bewirkte Verschiebung eines gegenüber dem Fahrzeugkörper (5) verschiebbar gelagerten Bauteils (2,81) der mechanischen Lenkung entgegen einer Vorspannkraft der mechanischen Betätigung des Steuerventils (12) dient.

2. Hydraulische Hilfskraftlenkung nach Anspruch 1, dadurch **gekennzeichnet**, daß eines von zwei relativ zueinander verschiebbarer Ventilelementen (11,13) an dem verschiebbaren Bauteil (2,81) der mechanischen Lenkung befestigt ist, während das andere Element am Fahrzeugkörper (5) oder einem mit diesem fest verbundenen Teil angelenkt ist.

3. Hydraulische Hilfskraftlenkung nach einem der vorhergehenden Ansprüche, dadurch **gekennzeichnet**, daß das Lenkgetriebe (2) der mechanischen Lenkung durch elastische Mittel verschiebbar am Fahrzeugaufbau (5) gelagert ist, das die hydraulische Einheit, zumindest aber eines zweier relativ zueinander verschiebbarer Ventilelemente (11,13), fest mit dem Lenkgetriebe (2) verbunden ist, während das andere Ventilelement mit dem Fahrzeugkörper (5) oder einem mit diesem fest verbundenen Teil fest verbunden ist.

4. Hydraulische Hilfskraftlenkung nach einem der vorhergehenden Ansprüche, dadurch **gekennzeichnet**, daß das Lenkgetriebe (2) in Richtung der Fahrzeugquerachse verschiebbar am Fahrzeugkörper (5) gelagert ist, daß das Gehäuse (11) des Steuerventils (12) starr mit dem Lenkgetriebe (2) verbunden ist, und daß das im Gehäuse (11) des Steuerventils (12) verschiebbare Steuerelement (13), welches mit dem Fahrzeugkörper verbunden ist, in beide Verschieberichtungen gegen das Gehäuse (11) oder gegen ein mit diesem starr verbundenes Bauteil elastisch vorgespannt ist.

5. Hydraulische Hilfskraftlenkung nach einem der vorhergehenden Ansprüche, dadurch dadurch **gekennzeichnet**, daß das Lenkgetriebe (2) als Zahnstangengetriebe mit einem Antriebsritzel (82) und einer Zahnstange (89) ausgeführt ist.

6. Hydraulische Hilfskraftlenkung nach Anspruch 5, dadurch **gekennzeichnet**, daß das Lenkgetriebe (2) eine Schrägverzahnung aufweist.

7. Hydraulische Hilfskraftlenkung nach einem der vorhergehenden Ansprüche, dadurch **gekennzeichnet**, daß das Lenkgetriebe (2) als Kugelumlauflenkgetriebe mit einer Antriebsschnecke, die über eine Kugelkette mit dem Arbeitskolben (8) in Verbindung steht, ausgebildet ist.

8. Hydraulische Hilfskraftlenkung nach Anspruch 6, dadurch **gekennzeichnet**, daß zumindest der Abschnitt (81) der Lenkwelle (1) der das Antriebsritzel (82) aufweist, axial verschiebbar in einem Gehäuse (80) gelagert und durch ein Federelement (50) vorgespannt ist und daß die Verschiebung des Abschnitts (81) das Steuerventil (12) betätigt.

9. Hydraulische Hilfskraftlenkung nach Anspruch 7, dadurch **gekennzeichnet**, daß zumindest der Abschnitt der Lenkwelle, welcher die Antriebsschnecke aufweist, axial verschiebbar in einem Gehäuse gelagert und durch eine Federelement vorgespannt ist und daß die Verschiebung dieses Abschnitts das Steuerventil betätigt.

10. Hydraulische Hilfskraftlenkung nach einem der vorhergehenden Ansprüche, dadurch **gekennzeichnet**, daß zur Erzielung der Vorspannkraft eine Anordnung in Form zweier gegeneinander vorgespannter Federelemente (14) vorgesehen ist.

11. Hydraulische Hilfskraftlenkung nach einem der vorhergehenden Ansprüche, dadurch **gekennzeichnet**, daß die Vorspannung durch mindestens ein gefesseltes Federelement (50) erfolgt.

12. Hydraulische Hilfskraftlenkung nach einem der vorhergehenden Ansprüche, dadurch **gekennzeichnet**, daß zur Vorspannung eine Kombination eines gefesselten Federelementes (50) und eines elastischen Abschnittes (73) vorgesehen ist.

13. Hydraulische Hilfskraftlenkung nach einem der vorhergehenden Ansprüche, dadurch **gekennzeichnet**, daß das Federelement (14,43,50) als Schraubenfeder ausgeführt ist.

14. Hydraulische Hilfskraftlenkung nach einem der vorhergehenden Ansprüche, dadurch **gekennzeichnet**, daß das Federelement als Tellerfeder ausgeführt ist.

15. Hydraulische Hilfskraftlenkung nach einem der vorhergehenden Ansprüche, dadurch **gekennzeichnet**, daß das Federelement als elastomerer Körper (70) ausgeführt ist.

16. Hydraulische Hilfskraftlenkung nach einem der vorhergehenden Ansprüche, dadurch **gekennzeichnet**, daß das Federelement als Gasfeder ausgeführt ist.

17. Hydraulische Hilfskraftlenkung nach einem der vorhergehenden Ansprüche, dadurch **gekennzeichnet**, daß durch das Steuerelement (13) ein elektrischer Schalter (24) betätigbar ist, der die Pumpe (19,36,52) schaltet.

18. Hydraulische Hilfskraftlenkung nach einem der vorhergehenden Ansprüche, dadurch **gekennzeichnet**, daß der Schalter (24,77) im Federelement (50) integriert ist.

19. Hydraulische Hilfskraftlenkung nach einem der vorhergehenden Ansprüche, dadurch **gekennzeichnet**, daß der Arbeitszylinder (6), die Pumpe (19,36,52), das Steuerventil (12) und ein Behälter (18) als integrierte Einheit ausgebildet ist.

20. Hydraulische Hilfskraftlenkung nach einem der vorhergehenden Ansprüche, dadurch **gekennzeichnet**, daß das Steuerventil (12) als 3/3-Wegeventil in Längsschieberbauweise ausgeführt ist.

21. Hydraulische Hilfskraftlenkung nach einem der vorhergehenden Ansprüche, dadurch **gekennzeichnet**, daß das Steuerventil (12) als mittig offenes Schieberventil ausgeführt ist.

22. Hydraulische Hilfskraftlenkung nach einem der vorhergehenden Ansprüche, dadurch **gekennzeichnet**, daß das Steuerventil (12) als mittig geschlossenes Schieberventil ausgeführt ist.

23. Hydraulische Hilfskraftlenkung nach einem der vorhergehenden Ansprüche, dadurch **gekennzeichnet**, daß das Steuerventil (12) als Doppelsitzventil ausgebildet ist.

24. Hydraulische Hilfskraftlenkung nach einem der vorhergehenden Ansprüche, dadurch **gekennzeichnet**, daß eine reversierbare Pumpe (36) vorgesehen ist, deren Drehrichtung in Abhängigkeit von der Lenkrichtung geschaltet ist.

25. Hydraulische Hilfskraftlenkung nach einem der vorhergehenden Ansprüche, dadurch **gekennzeichnet**, daß das verschiebbar gelagerte Bauteil (2,81) der Lenkung lediglich begrenzt verschiebbar ist.

26. Hydraulische Hilfskraftlenkung nach einem der vorhergehenden Ansprüche, dadurch **gekennzeichnet**, daß das Steuerventil (12) elastisch zentriert ist, wobei die zentrierende elastische Anordnung (14,43) im Kraftfluß der Lenkkraft liegt.

27. Hydraulische Hilfskraftlenkung nach einem der vorhergehenden Ansprüche, dadurch **gekennzeichnet**, daß die elastische Anordnung (14,43) mindestens eine sich an zwei Stützplatten (41,42) abstützende Feder (43) umfaßt, wobei die Stützplatten (41,42) gegen zwei beabstandete Anschläge (39,40) des Gehäuses (11) des Steuerventils (12) vorgespannt sind, und daß am Steuerelement (13) des Steuerventils (12) Anschlagflächen (44,45) gleichen Abstands vorgesehen sind, mittels derer die jeweils zugeordnete Stützplatte (41 bzw. 42) entgegen der Vorspannkraft der Feder (43) beaufschlagbar ist.

28. Hydraulische Hilfskraftlenkung nach einem der vorhergehenden Ansprüche, dadurch **gekennzeichnet**, daß ein Druckspeicher (90) zwischen die Pumpe (19,36,52) und das Steuerventil (12) geschaltet ist.

29. Hydraulische Hilfskraftlenkung nach einem der vorhergehenden Ansprüche, dadurch **gekennzeichnet**, daß zwischen dem Druckspeicher (90) und dem Steuerventil (12) ein Schaltventil (92,100) vorgesehen ist.

30. Hydraulische Hilfskraftlenkung nach Anspruch 28 oder 29, dadurch **gekennzeichnet**, daß zwischen dem Druckspeicher (90) und dem Steuerventil (12) eine Drosselstelle (94) vorgesehen ist.

31. Hydraulische Hilfskraftlenkung nach Anspruch 29 oder 30, dadurch **gekennzeichnet**, daß das Schaltventil ein 2/2-Wegeventil ist.

32. Hydraulische Hilfskraftlenkung nach Anspruch 29 oder 30, dadurch **gekennzeichnet**, daß das Schaltventil ein 3/2-Wegeventil ist.

33. Hydraulische Hilfskraftlenkung nach Anspruch 32, dadurch **gekennzeichnet**, daß durch das 3/2-Wegeventil (100) eine Verbindung (17,21,101,102) zwischen den beiden Arbeitskammern (9,10) und dem Behälter (18) schaltbar ist.

34. Hydraulische Hilfskraftlenkung nach einem der Ansprüche 29 bis 33, dadurch **gekennzeichnet**, daß das Schaltventil (91,100) in stromlosem Zustand die Verbindung (17,21) zwischen der Pumpe (19,36,52) und von dem Druckspeicher (90) zum Steuerventil (12) unterbricht.

35. Hydraulische Hilfskraftlenkung nach einem der Ansprüche 29 bis 34, dadurch **gekennzeichnet**, daß zusätzlich zu der durch das Steuerventil (12) schaltbaren Verbindung zwischen den Arbeitskammern und dem Behälter (18) jeweils eine weitere schaltbare Verbindung zwischen jeweils einer Arbeitskammer und dem Behälter (18) vorgesehen ist.

36. Hydraulische Hilfskraftlenkung nach einem der vorhergehenden Ansprüche, dadurch **gekennzeichnet**, daß die hydraulische Einheit mit Bremsflüssigkeit betrieben wird.

37. Hydraulische Hilfskraftlenkung nach einem der vorhergehenden Ansprüche, dadurch **gekennzeichnet**, daß die Energieversorgung einer hydraulischen Bremsanlage auch die hydraulische Hilfskraftlenkung mit Druckmittel versorgt.

38. Hydraulische Hilfskraftlenkung nach Anspruch 1 dadurch **gekennzeichnet**, daß die mechanische Lenkung als Zahnstangenlenkung mit einem mit der Lenkwelle (1) verbundenen Antriebsritzel (82) und einer Zahnstange (89) ausgeführt ist, daß die Drehmomentübertragung von der Lenkwelle (1) auf das Antriebsritzel (82) durch mindestens einen Bolzen (137) erfolgt, der in je eine radial verlaufende Ausnehmung (136 bzw. 147) sowohl des Antriebsritzels (82, 138) als auch der Lenkwelle (1.135) eingreift, daß eine dieser radialen Ausnehmungen als schräg zur Radialebene verlaufende Kulissenführung (136) ausgebildet ist, und daß die Lenkwelle (1,135) axial verschiebbar und vorgespannt auf dem Antriebsritzel (82) gelagert und mit dem Steuerventil (12) verbunden ist.

39. Hydraulische Hilfskraftlenkung nach Anspruch 38, dadurch **gekennzeichnet**, daß der Bolzen (137) zumindest teilweise konisch ausgeführt und durch elastische Mittel (139) in Längsrichtung vorgespannt ist.

40. Hydraulische Hilfskraftlenkung nach einem der Ansprüche 38 oder 39, dadurch **gekennzeichnet**, daß die Lenkwelle (1,135) einen radial nach außen weisenden Bund (145) besitzt, der gabelförmig von einem Betätigungselement (146) des Steuerventils (12) umgriffen ist.

41. Hydraulische Hilfskraftlenkung nach Anspruch 1 dadurch **gekennzeichnet**, daß das Antriebsritzel (82) der mechanischen Lenkung schrägverzahnt und axial verschiebbar mittels mindestens eines Wälzlagers (85) im Gehäuse (80) des Lenkgetriebes (2) gelagert ist, daß der Außenring (111) des Wälzlagers axial verschiebbar im Gehäuse (80) gelagert und an beiden Stirnseiten durch elastische Mittel (114) beaufschlagt ist und daß der Lagerinnenring (110) auf dem Antriebsritzel (82) axial fixiert ist, welches mit dem Steuerventil (12) verbunden ist.

42. Hydraulische Hilfskraftlenkung nach Anspruch 1, dadurch **gekennzeichnet**, daß das Antriebsritzel (82) der mechanischen Lenkung schrägverzahnt und axial verschiebbar mittels mindestens eines Wälzlagers (85) im Gehäuse (80) des Lenkgetriebes (2) gelagert ist, daß der Innenring (110) des Wälzlagers (85) axial verschiebbar auf dem Antriebsritzel (82), welches mit dem Steuerventil (12) verbunden ist, gelagert und stirnseitig jeweils durch elastische Mittel (114) beaufschlagt ist und daß der Außenring (111) des Lagers im Gehäuse (80) axial fixiert ist.

43. Hydraulische Hilfskraftlenkung nach Anspruch 41 oder 42, dadurch **gekennzeichnet**, daß die Beaufschlagung durch die elastischen Mittel (114) beidseitig über jeweils eine Zwischenscheibe (117) erfolgt, die an einen Anschlag anlegbar ist, wobei der Abstand der beiden Anschläge der Breite des Wälzlagers (85) entspricht.

44. Hydraulische Hilfskraftlenkung nach Anspruch 1, dadurch **gekennzeichnet**, daß das mit dem Steuerventil (12) verbundene Antriebsritzel (82) schrägverzahnt ist, daß zumindest ein Abschnitt (120) der Lenkwelle (1) drehbar aber axial fixiert im Gehäuse (80) gelagert ist, daß das Antriebsritzel (82) axial verschiebbar und in beide axialen Bewegungsrichtungen vorgespannt in dem Abschnitt (120) der Lenkwelle (1) gelagert ist.

45. Hydraulische Hilfskraftlenkung nach Anspruch 44, dadurch **gekennzeichnet**, daß im Bereich der Lagerstelle des Antriebsritzels (82) sowohl im Lagerzapfen (122) des Antriebsritzels (82) als auch im zugeordneten Lagerbereich (121) des Abschnittes (135) der Lenkwelle (1) jeweils mindestens eine axial verlaufende Nut vorgesehen ist, in welchen mindestens ein kugelförmiges Mitnehmerelement (124) eingesetzt ist.

46. Hydraulische Hilfskraftlenkung nach Anspruch 44 oder 45, dadurch **gekennzeichnet**, daß zur axialen Vorspannung des Antriebsritzels (82) ein gefesseltes vorgespanntes Federelement (125) zwischen je zwei Anschlägen (130,131 bzw. 132,133) sowohl auf dem Antriebsritzel (82) als auch im Abschnitt (120) der Lenkwelle (1) vorgesehen ist.

47. Hydraulische Hilfskraftlenkung nach einem der Ansprüche 41 bis 46, dadurch **gekennzeichnet**, daß das Steuerventil (12) koaxial mit dem Antriebsritzel (82) verbunden ist und der Lagerung des Antriebsritzels dient.

48. Hydraulische Hilfskraftlenkung nach einem der vorhergehenden Ansprüche, dadurch **gekennzeichnet**, daß die elastischen Mittel als Tellerfedern (114,143) ausgeführt sind.

49. Hydraulische Hilfskraftlenkung nach einem der vorhergehenden Ansprüche, dadurch **gekennzeichnet**, daß durch das Steuerventil (12) ein Schalter (24) zum Aktivieren der Pumpe (19) betätigbar ist.

# Fig. 1

Dr. M. Kahrs — 29/27/26
L. Kunze — 12
J. Baier — 4/3
G. Kunz — 2X
B. Möller — 2X
W. Beer — 2/1
H.-G. Krines — 1X
G. Schudt — 1

EP 0 362 592 A2

# Fig. 2

Dr. M. Kahrs — 29/27/26
L. Kunze — 12
J. Baier — 4/3
G. Kunz — 2X
B. Möller — 2X
W. Beer — 2/1
H.-G. Krines — 1X
G. Schudt — 1

## Fig. 3

Dr. M. Kahrs    – 29/27/26
L. Kunze       – 12
J. Baier       – 4/3
G. Kunz        – 2X
B. Möller      – 2X
W. Beer        – 2/1
H.-G. Krines   – 1X
G. Schudt      – 1

Fig. 4

Dr. M. Kahrs — 29/27/26X
L. Kunze — 12
I. Baier — 4/3
J. Kunz — 2X
B. Möller — 2X
W. Beer — 2/1
H.-G. Krines — 1X
G. Schudt — 1

EP 0 362 592 A2

Fig. 5

Dr. M. Kahrs    – 29/27/26

L. Kunze    – 12

J. Baier    – 4/3

G. Kunz    – 2X

B. Möller    – 2X

W. Beer    – 2/1

H.-G. Krines    – 1X

G. Schudt    – 1

**Fig.6**

73    73
72
70    71
F→    ←F
75    75

**Fig.7**

77
73    71(72)
73
8
8
73

**Fig.8**

71(72)    x
77
73
y

Fig.9

Dr. M. Kahrs  — 29/27/26
L. Kunze     — 12
J. Baier     — 4/3
G. Kunz      — 2X
B. Möller    — 2X
W. Beer      — 2/1
H.-G. Krines — 1X
G. Schudt    — 1

Fig.10

Dr. M. Kahrs    — 29/27/26:
L. Kunze       — 12
J. Baier       — 4/3
G. Kunz        — 2X
B. Möller      — 2X
W. Beer        — 2/1
H.-G. Krines   — 1X
G. Schudt      — 1

Fig.11

EP 0 362 592 A2

Fig. 12

| Dr. M. Kahrs | – 29/27/26 |
| L. Kunze | – 12 |
| J. Baier | – 4/3 |
| G. Kunz | – 2X |
| B. Möller | – 2X |
| W. Beer | – 2/1 |
| H.-G. Krines | – 1X |
| G. Schudt | – 1 |

Fig. 13

Dr. M. Kahrs — 29/27/26:
L. Kunze — 12
J. Baier — 4/3
G. Kunz — 2x
B. Möller — 2x
W. Beer — 2/1
H.-G. Krines — 1x
G. Schudt — 1

EP 0 362 592 A2

14 (6569, 6789)

Fig. 14

Fig. 15

Fig. 16

Dr. M. Kahrs    – 29/27/26X
L. Kunze        – 12
J. Baier        – 4/3
G. Kunz         – 2X
B. Möller       – 2X
W. Beer         – 2/1
H.-G. Krines    – 1X
G. Schudt       – 1

Fig. 17

| Dr. M. Kahrs | — 29/27/26 |
| L. Kunze | — 12 |
| J. Baier | — 4/3 |
| G. Kunz | — 2X |
| B. Möller | — 2X |
| W. Beer | — 2/1 |
| H.-G. Krines | — 1X |
| G. Schudt | — 1 |

Dr. M. Kahrs — 29/27/26X
L. Kunze — 12
J. Baier — 4/3
G. Kunz — 2X
B. Möller — 2X
W. Beer — 2/1
H.-G. Krines — 1X
G. Schudt — 1

Fig. 18

Fig. 19

EP 0 362 592 A2

6614 (6569, 6789)